# EUROPEAN PATENT APPLICATION

(11) **EP 4 350 509 A1**
(43) Date of publication of application: **10.04.2024**
(21) Application number: 23193660.0
(22) Date of filing: 28.08.2023
(51) Int. Cl.: G06F 9/30, G06F 9/38

(54) **DYNAMIC BRANCH CAPABLE MICRO-OPERATIONS CACHE**

(30) Priority: 05.10.2022 US 202217960583
(71) Applicant: Nokia Solutions and Networks Oy, 02610 Espoo (FI)
(72) Inventor: DUTTA, Pranjal Kumar, Sunnyvale, 94086 (US)
(74) Representative: Novagraaf Technologies

(57) **Abstract**

Various example embodiments for supporting processor capabilities are presented herein. Various example embodiments for supporting processor capabilities may be configured to support increased efficiency in utilization of a micro-operations cache (UC) of a processor. Various example embodiments for supporting increased efficiency in utilization of a UC of a processor may be configured to support increased efficiency in utilization of the UC of the processor based on configuration of the processor such that UC lines created by a prediction window (PW) during execution of a set of instructions by the processor are not invalidated on misprediction of a branch instruction in the set of instructions.

## Description

### TECHNICAL FIELD

Various example embodiments relate generally to computer systems and, more particularly but not exclusively, to processors of computer systems.

### BACKGROUND

Computer systems utilize various types of processors to perform various functions in various contexts.

### SUMMARY

In at least some example embodiments, an apparatus includes a decode unit configured to decode a set of instructions of a program into a set of micro-operations, wherein the set of instructions includes a conditional branch instruction, wherein the set of micro-operations includes one or more micro-operations of the conditional branch instruction, a branch predictor configured to provide, for the conditional branch instruction, a prediction as to whether a branch of the conditional branch instruction will be taken when the conditional branch instruction is executed, and a micro-operations cache configured to store, in a cache line, the set of micro-operations and store, in the cache line based on the prediction as to whether the branch of the conditional branch instruction will be taken when the conditional branch instruction is executed, information indicative as to whether streaming of the set of micro-operations to an execution unit is to be terminated after the one or more micro-operations of the conditional branch instruction have been streamed to the execution unit. In at least some example embodiments, the apparatus is configured to control, based on the information indicative as to whether streaming of the set of micro-operations to an execution unit is to be terminated after the one or more micro-operations of the conditional branch instruction have been streamed to the execution unit, streaming of the set of micro-operations to the execution unit. In at least some example embodiments, the information indicative as to whether streaming of the set of micro-operations to the execution unit is to be terminated after the one or more micro-operations of the conditional branch instruction have been streamed to the execution unit is stored in metadata of the cache line. In at least some example embodiments, the information indicative as to whether streaming of the set of micro-operations to the execution unit is to be terminated after the one or more micro-operations of the conditional branch instruction have been streamed to the execution unit includes a first variable configurable to indicate an offset of an instruction pointer of the conditional branch instruction and a second variable configurable to indicate an offset of a last micro-operation of the one or more micro-operations of the conditional branch instruction. In at least some example embodiments, the first variable and the second variable are set based on whether the conditional branch instruction is predicted to not be taken when the conditional branch instruction is executed. In at least some example embodiments, when the conditional branch instruction is predicted to not be taken when the conditional branch instruction is executed, the first variable is set to zero and the second variable is set to zero. In at least some example embodiments, the conditional branch instruction is predicted to be taken when the conditional branch instruction is executed, the first variable is set to the offset of the instruction pointer of the conditional branch instruction and the second variable is set to the offset of the last micro-operation of the one or more micro-operations of the conditional branch instruction. In at least some example embodiments, the apparatus is configured to update, based on a condition that results in a resizing of the prediction window, the information indicative as to whether streaming of the micro-operations to the execution unit is to be terminated after the one or more micro-operations of the conditional branch instruction have been streamed to the execution unit. In at least some example embodiments, the apparatus further comprises a branch vector cache configured to store information indicative of a location of the one or more micro-operations of the conditional branch instruction within the cache line of the micro-operations cache. In at least some example embodiments, the apparatus is configured to control, based on the information indicative of the location of the one or more micro-operations of the conditional branch instruction within the cache line of the micro-operations cache, streaming of the set of micro-operations to the execution unit. In at least some example embodiments, wherein the information indicative of the location of the one or more micro-operations of the conditional branch instruction within the cache line of the micro-operations cache includes an instruction pointer of the conditional branch instruction, an instruction pointer of a first instruction of the cache line that includes the one or more micro-operations of the conditional branch instruction, and an offset of a final micro-operation in the one or more micro-operations of the conditional branch instruction that is included in the cache line of the micro-operations cache. In at least some example embodiments, the information indicative of the location of the one or more micro-operations of the conditional branch instruction within the cache line of the micro-operations cache is stored in an entry of the branch vector cache that is associated with the cache line of the micro-operations cache, wherein a key portion of the entry includes an instruction pointer of the conditional branch instruction and a size of the conditional branch instruction, wherein a data portion of the entry includes an instruction pointer of a first instruction of the cache line that includes the one or more micro-operations of the conditional branch instruction and an offset of a final micro-operation in the one or more micro-operations of the conditional branch instruction that is included in the cache line of the micro-operations cache. In at least some example embodiments, the branch predictor is configured to generate a prediction window indicative of a sequence of instructions in the set of instructions predicted to be executed. In at least some example embodiments, invalidation of the cache line of the micro-operations cache is prevented based on a determination that a branch misprediction for the conditional branch instruction causes a dynamic resizing of the prediction window. In at least some example embodiments, the branch misprediction includes a determination that the branch of the branch instruction is predicted to be not taken when fetching the conditional branch instruction but is actually taken when the condition branch instruction is executed. In at least some example embodiments, the branch misprediction includes a determination that that the branch of the branch instruction is predicted to be taken when fetching the condition branch instruction but is not actually taken when the conditional branch instruction is executed. In at least some example embodiments, the apparatus is configured to provide a subset of the micro-operations of the cache line to an execution unit based on detection of a condition associated with the prediction window. In at least some example embodiments, the condition is a shrinking of the prediction window, wherein the subset of the micro-operations of the cache line includes a starting micro-operation of the cache line through a final micro-operation of the one or more micro-operations of the conditional branch instruction. In at least some example embodiments, the condition is an expansion of the prediction window, wherein the subset of the micro-operations of the cache line includes a starting micro-operation of an instruction immediately following the conditional branch instruction through a final micro-operation of the cache line.

In at least some example embodiments, a non-transitory computer readable medium includes program instructions that, when executed by an apparatus, cause the apparatus at least to decode a set of instructions of a program into a set of micro-operations, wherein the set of instructions includes a conditional branch instruction, wherein the set of micro-operations includes one or more micro-operations of the conditional branch instruction, provide, for the conditional branch instruction, a prediction as to whether a branch of the conditional branch instruction will be taken when the conditional branch instruction is executed, store, in a cache line of a micro-operations cache, the set of micro-operations, store, in the cache line of the micro-operations cache based on the prediction as to whether the branch of the conditional branch instruction will be taken when the conditional branch instruction is executed, information indicative as to whether streaming of the set of micro-operations to an execution unit is to be terminated after the one or more micro-operations of the conditional branch instruction have been streamed to the execution unit, and control, based on the information indicative as to whether streaming of the set of micro-operations to an execution unit is to be terminated after the one or more micro-operations of the conditional branch instruction have been streamed to the execution unit, streaming of the set of micro-operations to the execution unit. In at least some example embodiments, the program instructions, when executed by the apparatus, cause the apparatus at least to control, based on the information indicative as to whether streaming of the set of micro-operations to an execution unit is to be terminated after the one or more micro-operations of the conditional branch instruction have been streamed to the execution unit, streaming of the set of micro-operations to the execution unit. In at least some example embodiments, the information indicative as to whether streaming of the set of micro-operations to the execution unit is to be terminated after the one or more micro-operations of the conditional branch instruction have been streamed to the execution unit is stored in metadata of the cache line. In at least some example embodiments, the information indicative as to whether streaming of the set of micro-operations to the execution unit is to be terminated after the one or more micro-operations of the conditional branch instruction have been streamed to the execution unit includes a first variable configurable to indicate an offset of an instruction pointer of the conditional branch instruction and a second variable configurable to indicate an offset of a last micro-operation of the one or more micro-operations of the conditional branch instruction. In at least some example embodiments, the first variable and the second variable are set based on whether the conditional branch instruction is predicted to not be taken when the conditional branch instruction is executed. In at least some example embodiments, when the conditional branch instruction is predicted to not be taken when the conditional branch instruction is executed, the first variable is set to zero and the second variable is set to zero. In at least some example embodiments, the conditional branch instruction is predicted to be taken when the conditional branch instruction is executed, the first variable is set to the offset of the instruction pointer of the conditional branch instruction and the second variable is set to the offset of the last micro-operation of the one or more micro-operations of the conditional branch instruction. In at least some example embodiments, the program instructions, when executed by the apparatus, cause the apparatus at least to update, based on a condition that results in a resizing of the prediction window, the information indicative as to whether streaming of the micro-operations to the execution unit is to be terminated after the one or more micro-operations of the conditional branch instruction have been streamed to the execution unit. In at least some example embodiments, the program instructions, when executed by the apparatus, cause the apparatus at least to store, in a branch vector cache, information indicative of a location of the one or more micro-operations of the conditional branch instruction within the cache line of the micro-operations cache. In at least some example embodiments, the program instructions, when executed by the apparatus, cause the apparatus at least to control, based on the information indicative of the location of the one or more micro-operations of the conditional branch instruction within the cache line of the micro-operations cache, streaming of the set of micro-operations to the execution unit. In at least some example embodiments, the information indicative of the location of the one or more micro-operations of the conditional branch instruction within the cache line of the micro-operations cache includes an instruction pointer of the conditional branch instruction, an instruction pointer of a first instruction of the cache line that includes the one or more micro-operations of the conditional branch instruction, and an offset of a final micro-operation in the one or more micro-operations of the conditional branch instruction that is included in the cache line of the micro-operations cache. In at least some example embodiments, the information indicative of the location of the one or more micro-operations of the conditional branch instruction within the cache line of the micro-operations cache is stored in an entry of the branch vector cache that is associated with the cache line of the micro-operations cache, wherein a key portion of the entry includes an instruction pointer of the conditional branch instruction and a size of the conditional branch instruction, wherein a data portion of the entry includes an instruction pointer of a first instruction of the cache line that includes the one or more micro-operations of the conditional branch instruction and an offset of a final micro-operation in the one or more micro-operations of the conditional branch instruction that is included in the cache line of the micro-operations cache. In at least some example embodiments, the program instructions, when executed by the apparatus, cause the apparatus at least to generate, by the branch predictor, a prediction window indicative of a sequence of instructions in the set of instructions predicted to be executed. In at least some example embodiments, invalidation of the cache line of the micro-operations cache is prevented based on a determination that a branch misprediction for the conditional branch instruction causes a dynamic resizing of the prediction window. In at least some example embodiments, the branch misprediction includes a determination that the branch of the branch instruction is predicted to be not taken when fetching the conditional branch instruction but is actually taken when the condition branch instruction is executed. In at least some example embodiments, the branch misprediction includes a determination that that the branch of the branch instruction is predicted to be taken when fetching the condition branch instruction but is not actually taken when the conditional branch instruction is executed. In at least some example embodiments, the program instructions, when executed by the apparatus, cause the apparatus at least to provide a subset of the micro-operations of the cache line to an execution unit based on detection of a condition associated with the prediction window. In at least some example embodiments, the condition is a shrinking of the prediction window, wherein the subset of the micro-operations of the cache line includes a starting micro-operation of the cache line through a final micro-operation of the one or more micro-operations of the conditional branch instruction. In at least some example embodiments, the condition is an expansion of the prediction window, wherein the subset of the micro-operations of the cache line includes a starting micro-operation of an instruction immediately following the conditional branch instruction through a final micro-operation of the cache line.

In at least some example embodiments, a method includes decoding a set of instructions of a program into a set of micro-operations, wherein the set of instructions includes a conditional branch instruction, wherein the set of micro-operations includes one or more micro-operations of the conditional branch instruction, providing, for the conditional branch instruction, a prediction as to whether a branch of the conditional branch instruction will be taken when the conditional branch instruction is executed, storing, in a cache line of a micro-operations cache, the set of micro-operations, storing, in the cache line of the micro-operations cache based on the prediction as to whether the branch of the conditional branch instruction will be taken when the conditional branch instruction is executed, information indicative as to whether streaming of the set of micro-operations to an execution unit is to be terminated after the one or more micro-operations of the conditional branch instruction have been streamed to the execution unit, and controlling, based on the information indicative as to whether streaming of the set of micro-operations to an execution unit is to be terminated after the one or more micro-operations of the conditional branch instruction have been streamed to the execution unit, streaming of the set of micro-operations to the execution unit. In at least some example embodiments, the method includes controlling, based on the information indicative as to whether streaming of the set of micro-operations to an execution unit is to be terminated after the one or more micro-operations of the conditional branch instruction have been streamed to the execution unit, streaming of the set of micro-operations to the execution unit. In at least some example embodiments, the information indicative as to whether streaming of the set of micro-operations to the execution unit is to be terminated after the one or more micro-operations of the conditional branch instruction have been streamed to the execution unit is stored in metadata of the cache line. In at least some example embodiments, the information indicative as to whether streaming of the set of micro-operations to the execution unit is to be terminated after the one or more micro-operations of the conditional branch instruction have been streamed to the execution unit includes a first variable configurable to indicate an offset of an instruction pointer of the conditional branch instruction and a second variable configurable to indicate an offset of a last micro-operation of the one or more micro-operations of the conditional branch instruction. In at least some example embodiments, the first variable and the second variable are set based on whether the conditional branch instruction is predicted to not be taken when the conditional branch instruction is executed. In at least some example embodiments, when the conditional branch instruction is predicted to not be taken when the conditional branch instruction is executed, the first variable is set to zero and the second variable is set to zero. In at least some example embodiments, the conditional branch instruction is predicted to be taken when the conditional branch instruction is executed, the first variable is set to the offset of the instruction pointer of the conditional branch instruction and the second variable is set to the offset of the last micro-operation of the one or more micro-operations of the conditional branch instruction. In at least some example embodiments, the method includes updating, based on a condition that results in a resizing of the prediction window, the information indicative as to whether streaming of the micro-operations to the execution unit is to be terminated after the one or more micro-operations of the conditional branch instruction have been streamed to the execution unit. In at least some example embodiments, the method includes storing, in a branch vector cache, information indicative of a location of the one or more micro-operations of the conditional branch instruction within the cache line of the micro-operations cache. In at least some example embodiments, the method includes controlling, based on the information indicative of the location of the one or more micro-operations of the conditional branch instruction within the cache line of the micro-operations cache, streaming of the set of micro-operations to the execution unit. In at least some example embodiments, the information indicative of the location of the one or more micro-operations of the conditional branch instruction within the cache line of the micro-operations cache includes an instruction pointer of the conditional branch instruction, an instruction pointer of a first instruction of the cache line that includes the one or more micro-operations of the conditional branch instruction, and an offset of a final micro-operation in the one or more micro-operations of the conditional branch instruction that is included in the cache line of the micro-operations cache. In at least some example embodiments, the information indicative of the location of the one or more micro-operations of the conditional branch instruction within the cache line of the micro-operations cache is stored in an entry of the branch vector cache that is associated with the cache line of the micro-operations cache, wherein a key portion of the entry includes an instruction pointer of the conditional branch instruction and a size of the conditional branch instruction, wherein a data portion of the entry includes an instruction pointer of a first instruction of the cache line that includes the one or more micro-operations of the conditional branch instruction and an offset of a final micro-operation in the one or more micro-operations of the conditional branch instruction that is included in the cache line of the micro-operations cache. In at least some example embodiments, the method includes generating, by the branch predictor, a prediction window indicative of a sequence of instructions in the set of instructions predicted to be executed. In at least some example embodiments, invalidation of the cache line of the micro-operations cache is prevented based on a determination that a branch misprediction for the conditional branch instruction causes a dynamic resizing of the prediction window. In at least some example embodiments, the branch misprediction includes a determination that the branch of the branch instruction is predicted to be not taken when fetching the conditional branch instruction but is actually taken when the condition branch instruction is executed. In at least some example embodiments, the branch misprediction includes a determination that that the branch of the branch instruction is predicted to be taken when fetching the condition branch instruction but is not actually taken when the conditional branch instruction is executed. In at least some example embodiments, the method includes providing a subset of the micro-operations of the cache line to an execution unit based on detection of a condition associated with the prediction window. In at least some example embodiments, the condition is a shrinking of the prediction window, wherein the subset of the micro-operations of the cache line includes a starting micro-operation of the cache line through a final micro-operation of the one or more micro-operations of the conditional branch instruction. In at least some example embodiments, the condition is an expansion of the prediction window, wherein the subset of the micro-operations of the cache line includes a starting micro-operation of an instruction immediately following the conditional branch instruction through a final micro-operation of the cache line.

In at least some example embodiments, an apparatus includes means for decoding a set of instructions of a program into a set of micro-operations, wherein the set of instructions includes a conditional branch instruction, wherein the set of micro-operations includes one or more micro-operations of the conditional branch instruction, means for providing, for the conditional branch instruction, a prediction as to whether a branch of the conditional branch instruction will be taken when the conditional branch instruction is executed, means for storing, in a cache line of a micro-operations cache, the set of micro-operations, means for storing, in the cache line of the micro-operations cache based on the prediction as to whether the branch of the conditional branch instruction will be taken when the conditional branch instruction is executed, information indicative as to whether streaming of the set of micro-operations to an execution unit is to be terminated after the one or more micro-operations of the conditional branch instruction have been streamed to the execution unit, and means for controlling, at based on the information indicative as to whether streaming of the set of micro-operations to an execution unit is to be terminated after the one or more micro-operations of the conditional branch instruction have been streamed to the execution unit, streaming of the set of micro-operations to the execution unit. In at least some example embodiments, the apparatus includes means for controlling, based on the information indicative as to whether streaming of the set of micro-operations to an execution unit is to be terminated after the one or more micro-operations of the conditional branch instruction have been streamed to the execution unit, streaming of the set of micro-operations to the execution unit. In at least some example embodiments, the information indicative as to whether streaming of the set of micro-operations to the execution unit is to be terminated after the one or more micro-operations of the conditional branch instruction have been streamed to the execution unit is stored in metadata of the cache line. In at least some example embodiments, the information indicative as to whether streaming of the set of micro-operations to the execution unit is to be terminated after the one or more micro-operations of the conditional branch instruction have been streamed to the execution unit includes a first variable configurable to indicate an offset of an instruction pointer of the conditional branch instruction and a second variable configurable to indicate an offset of a last micro-operation of the one or more micro-operations of the conditional branch instruction. In at least some example embodiments, the first variable and the second variable are set based on whether the conditional branch instruction is predicted to not be taken when the conditional branch instruction is executed. In at least some example embodiments, when the conditional branch instruction is predicted to not be taken when the conditional branch instruction is executed, the first variable is set to zero and the second variable is set to zero. In at least some example embodiments, the conditional branch instruction is predicted to be taken when the conditional branch instruction is executed, the first variable is set to the offset of the instruction pointer of the conditional branch instruction and the second variable is set to the offset of the last micro-operation of the one or more micro-operations of the conditional branch instruction. In at least some example embodiments, the apparatus includes means for updating, based on a condition that results in a resizing of the prediction window, the information indicative as to whether streaming of the micro-operations to the execution unit is to be terminated after the one or more micro-operations of the conditional branch instruction have been streamed to the execution unit. In at least some example embodiments, the apparatus includes means for storing, in a branch vector cache, information indicative of a location of the one or more micro-operations of the conditional branch instruction within the cache line of the micro-operations cache. In at least some example embodiments, the apparatus includes means for controlling, based on the information indicative of the location of the one or more micro-operations of the conditional branch instruction within the cache line of the micro-operations cache, streaming of the set of micro-operations to the execution unit. In at least some example embodiments, the information indicative of the location of the one or more micro-operations of the conditional branch instruction within the cache line of the micro-operations cache includes an instruction pointer of the conditional branch instruction, an instruction pointer of a first instruction of the cache line that includes the one or more micro-operations of the conditional branch instruction, and an offset of a final micro-operation in the one or more micro-operations of the conditional branch instruction that is included in the cache line of the micro-operations cache. In at least some example embodiments, the information indicative of the location of the one or more micro-operations of the conditional branch instruction within the cache line of the micro-operations cache is stored in an entry of the branch vector cache that is associated with the cache line of the micro-operations cache, wherein a key portion of the entry includes an instruction pointer of the conditional branch instruction and a size of the conditional branch instruction, wherein a data portion of the entry includes an instruction pointer of a first instruction of the cache line that includes the one or more micro-operations of the conditional branch instruction and an offset of a final micro-operation in the one or more micro-operations of the conditional branch instruction that is included in the cache line of the micro-operations cache. In at least some example embodiments, the apparatus includes means for generating, by the branch predictor, a prediction window indicative of a sequence of instructions in the set of instructions predicted to be executed. In at least some example embodiments, invalidation of the cache line of the micro-operations cache is prevented based on a determination that a branch misprediction for the conditional branch instruction causes a dynamic resizing of the prediction window. In at least some example embodiments, the branch misprediction includes a determination that the branch of the branch instruction is predicted to be not taken when fetching the conditional branch instruction but is actually taken when the condition branch instruction is executed. In at least some example embodiments, the branch misprediction includes a determination that that the branch of the branch instruction is predicted to be taken when fetching the condition branch instruction but is not actually taken when the conditional branch instruction is executed. In at least some example embodiments, the apparatus includes means for providing a subset of the micro-operations of the cache line to an execution unit based on detection of a condition associated with the prediction window. In at least some example embodiments, the condition is a shrinking of the prediction window, wherein the subset of the micro-operations of the cache line includes a starting micro-operation of the cache line through a final micro-operation of the one or more micro-operations of the conditional branch instruction. In at least some example embodiments, the condition is an expansion of the prediction window, wherein the subset of the micro-operations of the cache line includes a starting micro-operation of an instruction immediately following the conditional branch instruction through a final micro-operation of the cache line.

### BRIEF DESCRIPTION OF THE DRAWINGS

The teachings herein can be readily understood by considering the following detailed description in conjunction with the accompanying drawings, in which:
FIG. 1 depicts an example embodiment of computing system including a processor and a memory for illustrating an instruction pipeline supported by the processor;
FIG. 2 depicts an example embodiment of a processor for use as the processor of the computing system of FIG. 1;
FIG. 3 depicts an example embodiment of a multi-core processor including multiple cores and multiple levels of caches;
FIG. 4 depicts an example embodiment of an N-way set associative instruction cache for use in a processor;
FIG. 5 depicts an example embodiment of an Instruction Pointer format for an address of an instruction in memory;
FIG. 6 depicts an example embodiment of a program for illustrating caching of instructions of the program in a micro-operations cache;
FIGs. 7A - 7C depict example embodiments of prediction windows with respect to IC line boundaries;
FIGs. 8A - 8B depict example embodiments of cache lines in an instruction cache of a processor for the program of FIG. 6.
FIGs. 9A - 9G depict example embodiments of cache lines in a micro-operations cache of a processor for the program of FIG. 6;
FIGs. 10A - 10C depict example embodiments of cache lines in a micro-operations cache of a processor for the program of FIG. 6, where the processor is configured such that cache lines created by a prediction window are not invalidated on misprediction of a branch instruction;
FIGs. 11A - 11B depict example embodiments of entries in a branch vector cache for the cache line of FIG. 10A in the micro-operations cache of the processor for the program of FIG. 6, where the processor is configured such that cache lines created by a prediction window are not invalidated on misprediction of a branch instruction;
FIGs. 12A - 12C depict an example embodiment of a processor including a micro-operations cache and a branch vector cache where the processor is configured such that cache lines created by a prediction window are not invalidated on misprediction of a branch instruction;
FIG. 13 depicts an example embodiment of a method for writing micro-operations to a UC;
FIG. 14 depicts an example embodiment of a method for streaming of micro-operations from a micro-operations cache for a prediction window;
FIG. 15 depicts an example embodiment of a method for supporting execution of a program by a processor configured to ensure that cache lines of a micro-operations cache of the processor are not invalidated on misprediction of a branch instruction; and
FIG. 16 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting processor capabilities are presented herein. Various example embodiments for supporting processor capabilities may be configured to support increased efficiency in utilization of a micro-operations cache (UC) of a processor. Various example embodiments for supporting increased efficiency in utilization of a UC of a processor may be configured to support increased efficiency in utilization of the UC of the processor based on configuration of the processor such that UC lines created by a prediction window (PW) during execution of a set of instructions by the processor are not invalidated on misprediction of a branch instruction in the set of instructions, where misprediction means either that the branch of the branch instruction is predicted to be not taken when fetching the instruction but is actually taken when executed or that the branch of the branch instruction is predicted to be taken when fetching the instruction but is not actually taken when executed. Various example embodiments for supporting increased efficiency in utilization of a UC of a processor, based on configuration of the processor such that UC lines created by a PW during execution of a set of instructions by the processor are not invalidated on misprediction of a branch instruction in the set of instructions, may be based on configuration of the processor to include an auxiliary cache in addition to the UC where the UC and the auxiliary cache may cooperate to support preventing invalidation of UC lines of the UC created by a PW on misprediction of a branch instruction. Various example embodiments for supporting increased efficiency in utilization of a UC of a processor may be configured such that the UC of the processor is immune to dynamic resizing of a PW due to changes in prediction of its conditional branch instructions, such that the UC can stream the exact set of micro-operations (UOPs) for any size of the PW. It will be appreciated that these and various other example embodiments and advantages or potential advantages of example embodiments for supporting processor capabilities may be further understood by way of reference to the various figures, which are discussed further below.

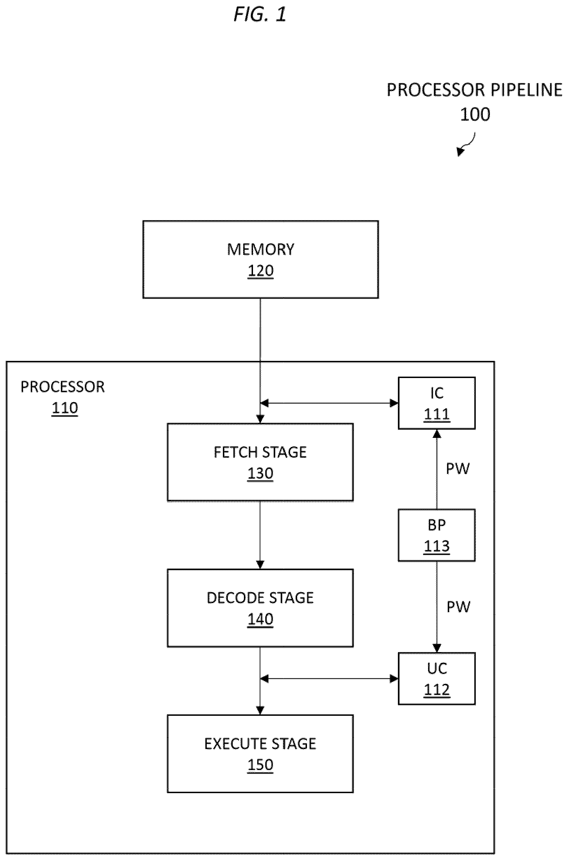

FIG. 1 depicts an example embodiment of computing system including a processor and a memory for illustrating an instruction pipeline supported by the processor.

The computing system 100 includes a processor 110 and a memory 120. The processor 110 includes an instruction cache (IC) 111, a micro-operations cache (UC) 112, and a branch predictor (BP) 113. The high level stages in the pipeline supported by the processor 110 include a fetch stage 130, a decode stage 140, and an execution stage 150.

In the processor 110, the format and encoding of the instructions in a program is determined by the Instruction Set Architecture (ISA) of the processor 110. For example, some well-known ISAs include x86/x86-64, IA-32/IA-64, MIPS, ARM, and so forth; however, the micro-architecture of a processor cannot execute the instructions of an ISA in their native form because of their complexity. An ISA is designed to offer sophisticated operations which, in turn, also keep the program compact, i.e., reduces the foot print of a program in the memory. It is noted that the optimal footprint of a program in memory is particularly important for optimal use of the IC. A majority of ISAs offer variable-length instructions, which further adds to the complexity of execution. So, at the micro-architectural level of a processor, instructions are represented by fixed-length simpler micro-operations (generally referred to as "micro-ops" or "UOPs"). An ISA instruction is broken down into one or more fixed-length UOPs. UOPs perform basic operations on data stored in one or more registers, including transferring data between registers or between registers and external buses, and performing arithmetic and logical operations on registers. For example, an add-register-to-memory ISA instruction performs addition of the value in a register X to the value in a memory location M. The instruction is broken down into a sequence of three separate UOPs as follows: (1) load from M to a register Y, (2) add Y to X, and (3) store X to M.

In the processor 110, execution of a program is based on pipeline which, as indicated above, includes the fetch stage 130, the decode stage 140, and the execute stage 150. The fetch stage 130 retrieves a block of instructions of a program from memory 120 or IC 111. The IC 111 is located on board the processor 110. The IC 111 is generally much smaller in size (e.g., 32KB, 64KB, 128KB, or the like) than the memory 120 and, thus, much faster than the memory 120. The IC 111 caches blocks of instructions fetched from the memory 120 in units called "IC Lines". If a set of instructions is repeatedly fetched then those instructions are likely available in the IC 111, so a hit in the IC 111 reduces the time to fetch instructions (as compared with fetching the instructions from the memory 120). The IC 111 is agnostic of syntax and semantics of instructions and an IC Line caches a memory block, i.e., all instructions in a fixed range of addresses in memory 120. The typical size of an IC line is 64B, although it will be appreciated that other sizes can be supported. The processor 110 fetches a block of instructions from the memory 120 only if the IC line is not found in the IC 111. In the IC 111, a memory block is identified by the first memory address in the memory block. In the decode stage 140, instructions fetched during the fetch stage 130 are dynamically decoded by the processor 110 to the native UOPs of the instructions. This dynamic decoding also provides a cleaner separation of the "stable" and "standardized" ISA from the underlying micro-architecture of the processor 110 that is free to define its own UOP set. As a result, a program that has been written for an ISA can run on different micro-architectures supporting that ISA. This has enabled program compatibility between different generations of processors to be easily achieved. For example, different micro-architectures can support the same ISA, but each can define their own native UOP set. The execute stage 150 executes the UOPs supplied by the decode stage 140.

In the processor 110, the fetch stage 130 and the decode stage 140 generally are costly in terms of clock cycles as well as power consumption. So, many modern processors implement another instruction cache, typically referred to as a micro-op cache (UC) or decoded stream buffer (DSB), which stores the already decoded UOPs. This is illustrated as the UC 112 of the processor 110. When the processor 110 needs to execute an instruction and its decoded UOPs already exists in the UC 112, then the UC 112 can directly supply the UOPs to the execution unit. The UC 112 is generally much smaller in size (e.g. 1.5KB, 2KB, 3KB, or the like) than the IC 111 and the memory 120 and, thus, much faster than the IC 111 and the memory 120 (typically operating at the clock speed of the processor 110). A hit in UC 112 eliminates the fetch stage 130 and the decode stage 140, both of which are costly, thereby improving the performance and power budget of the processor 110. An instruction is fetched and decoded only if it is a miss in the UC 112, otherwise the fetch stage 130 and the decode stage 140 can be powered off. It is noted that, although omitted from FIG. 1 for purposes of clarity, some processors may use a component called a Trace Cache (TC) instead of a UC, where a TC is simpler than a UC since a TC is a single large block including all instructions or micro-operations of a control flow.

In the processor 110, the UC 112 stores the UOPs received from the decode stage 140 in smaller sized blocks, but in the sequential order of execution. This means that each branch, conditional or unconditional, makes the processor 110 start with a new UC line even if the current IC line is not yet filled. This simple rule allows high bandwidth fetching from the UC 112 since, once there is a hit in UC 112, then the entire UC line can be supplied to the execute stage 150 without worrying about a change of execution sequence in the middle of a UC line. Herein, unless indicated otherwise, an address of an instruction in memory is referred to as an Instruction Pointer (IP). A UC line is identified by the IP of the parent instruction of the first UOP in the UC line; other than that no correlation exists between the UOPs in a UC line and their corresponding parent instructions, and it is noted that such correlation is not required since the entire UC line is supplied to the execution stage 150. As a result, UOPs in a UC line cannot be looked up by the IPs of their parent instructions.

In the processor 110, the BP 113 is configured to predict the outcome of a conditional branch instruction while fetching instructions from the memory 120, the IC 111, or the UC 112. A program may include branch instructions that alter the sequence of instructions executed by the processor 110. Branch instructions are of two types - one-way unconditional branch instruction and two-way conditional branch instruction. An unconditional branch instruction always jumps to a different location in program memory where a branch of the program code is stored. A conditional branch instruction can either be (1) "not taken" and continue execution with the first branch of the code which follows immediately after the conditional branch instruction or (2) "taken" and jump to a different place in program memory where the second branch of the code is stored. The outcome of a conditional branch instruction depends on certain conditions , such as a predicate variable. It is not known for certain whether a conditional branch will be taken or not taken until the condition has been calculated and the conditional branch has passed the execute stage 150 in the instruction pipeline. That means the processor 110 would have to wait until the conditional branch instruction has passed the execute stage 150 before the next instruction can enter the fetch stage 130 in the pipeline, which basically stalls the pipeline. To solve this problem, the front-end of the processor 110 tries to guess whether the conditional branch is most likely to be taken or not taken. The branch that is guessed to be the most likely is then fetched and speculatively executed. The BP 113 is logic circuitry that enables the front-end of the processor 110 to predict the outcome of a conditional branch instruction. If later it is detected that the guess was wrong, then the speculatively executed or partially executed instructions are discarded and the pipeline starts over with the correct branch, incurring a delay called "branch misprediction penalty".

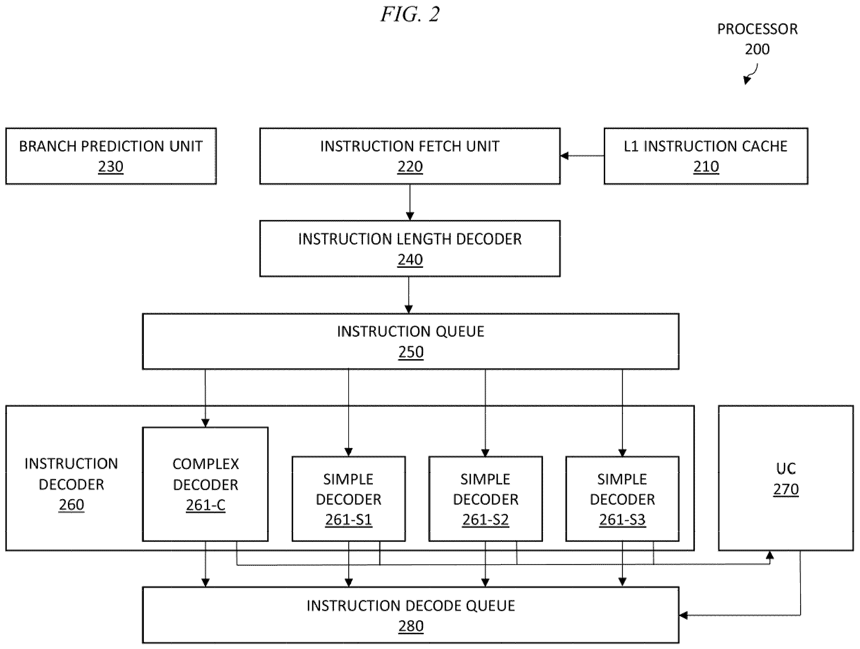

It will be appreciated that processors generally implement each of the three high-level stages of the instruction pipeline using additional stages. As a result, a pipeline of a processor may be composed of a large number of stages (e.g., 20 or more stages). An example of a processor, for illustrating stages used to implement portions of the instruction pipeline, is presented with respect to FIG. 2.

FIG. 2 depicts an example embodiment of a processor for use as the processor of the computing system of FIG. 1.

The processor 200 may include a frontend and a backend. It is noted that while details of the frontend are illustrated, details of the backend have been omitted for purposes of clarity.

The processor 200 includes a level 1 (L1) instruction cache (L1-IC) 210, an instruction fetch unit (IFU) 220, a branch prediction unit (BPU) 230, an instruction length decoder (ILD) 240, an instruction queue (IQ) 250, an instruction decoder (ID) 260, a UOP cache (UC) 270, and an instruction decode queue (IDQ) 280. It will be appreciated that the IFU 220 and BPU 230 may be considered to form the fetch stage while the ILD 240, IQ 250, ID 260, and IDQ 280 may be considered to form the decode stage.

The L1-IC 210 is a cache that is part of the cache hierarchy of the associated processor and may be further understood by considering the cache hierarchy of processors and the cache arrangement of caches.

In general, a cache is a smaller, faster memory, closer to a processor, which stores copies of the program data or program instructions from frequently accessed memory locations to reduce the average cost of access (time or energy). The data or program instructions are stored in the cache by blocks of contiguous memory locations, typically referred to as cache lines, where each cache line is indexed in the cache by the first memory address in the cache line. Caches benefit from the temporal and spatial locality of memory access patterns in a program, where spatial locality refers to use of relatively close memory locations (i.e., within a cache line) and temporal locality refers to the reuse of specific cache line within a relatively small time duration. Many processors use multiple levels of caches. For example, a common processor architecture might utilize at least three levels (L) of caches, which are typically referred to as L1, L2, and L3. The L1 cache is the smallest and nearest to the processor and, thus, faster than the other cache levels. Typically, the L1 cache is split into two portions: the L1 Instruction Cache (e.g., 32KB is size, although other sizes may be used) which holds only program instructions and the L1 Data Cache (e.g., 32KB in size, although other sizes may be used) which holds only program data. The L2 cache (e.g., 256KB in size, although other sizes may be used) and the L3 cache (e.g., 2MB in size, although other sizes may be used) are the subsequent levels which are usually unified caches (meaning that they hold both instructions and program data). The L3 cache typically is common for the processor cores in a multi-core processor and, thus, is located outside of the processor cores. It will be appreciated that the cache size and access latency grow according to the levels. If the cache line corresponding to a memory address sought is missing in the L1 cache, then the processor looks up in subsequent levels of caches (e.g., L2 cache, then L3 cache, and so forth). If the memory address is missing in all of the available cache levels, then the processor can access the main memory to retrieve the instruction or data at the memory address. So main memory is accessed only if the memory address is missing in all caches. The missing block, once located, is brought into a cache line in the L1 cache.

In general, a cache is typically organized as set associative array, which can be imagined as MxN matrix. The cache is divided into M sets and each set contains N cache lines. To place a memory block into the cache, its address is typically segregated into 3 fields - tag, index, offset. A memory block is first mapped into a set based on `index bits' derived from the address of the memory block. Then the memory block is placed into a cache line in the set and a 'tag' is stored in the cache line. The tag is composed of the bits in the address of the memory block (other than the index bits) that can distinguish between the cache lines sharing the same set. The offset field refers to any address within a cache line. The offset field is composed of a few least significant bits of the address and the number of bits is dependent on the size of the cache line. For example, if the cache line size is 64B, then the 6 least significant bits of the addresses are the offset bits. Here, the term Instruction Pointer (IP) is used to denote the memory address of an instruction, and the 3 fields of an IP that are used to map a block of instructions into a cache are referred to as IP-tag, IP-index, and IP-offset. If all cache lines in a set are occupied while trying to store a new memory block, then an existing cache line in the set is evicted (a replacement policy picks which cache line to evict) to make way for the new memory block. When the evicted cache line is accessed later, then it will result in a miss in the cache and, thus, will need to be brought back into the cache from the memory hierarchy. Such misses are referred to as conflict misses and repeated conflict misses due to collisions between cache lines sharing the same set is referred to as thrashing.

The IFU 220 is responsible for feeding the processor with instructions to execute, and thus, it is the first component where instructions are processed. The IFU 220 mainly includes the required logic to compute the next fetch address and then fetch the instructions from the L1-IC 210. The instructions are fetched from the L1-IC 210 by the IFU 220 in streams of raw bytes.

The BPU 230 is configured to predict the next fetch address for the IFU 220, because otherwise branch instructions introduce a significant extra level of complexity in fetching streams of instructions, since the correct fetch address cannot be calculated until the branch instruction itself is executed. By default, instructions are processed by a processor sequentially. This sequential execution can be disrupted by the control instructions (e.g., conditional branches, unconditional branches, subroutine calls and subroutine returns, and so forth) to start executing an instruction sequence starting at a new address (the target address). For example, JE (Jump If Equal) is an example of a conditional branch instruction in x86. A conditional branch is data-dependent (e.g., value of a data acts as the condition) and branches to the target address only if the condition is true. For example, instructions such as CALL, RET, and JUMP are examples of a subroutine call, a subroutine return, and an unconditional branch, respectively, in x86. Any control instruction other than conditional branch instruction will switch the execution sequence to the target address specified in the instruction. Herein, the target instruction sequence of a control instruction is referred to generally as a control block. Execution of a program can be viewed as executing a chain of certain control blocks. Herein, an order of execution of control blocks in a program is referred to as a control flow (i.e., flow of control). Conditional branches (e.g., JE) can generate multiple control flows in a program since every such branch is a fork and the execution can go either way on the fork based on the condition of the fork. Control instructions introduce significant extra complexity in fetching streams of instructions, since the correct fetch address after the control instruction cannot be calculated until the backend executes the control instruction itself. For this reason, the frontend of high-performance processors (namely, the BPU 230) predicts the next fetch address and speculatively starts fetching from the predicted address. There are two parts in this prediction. The first is predicting the direction of the branch taken by the control instruction, i.e., taken to the target sequence or not taken. The second part is predicting the target address of a branch. Once the direction of a branch is predicted, then the memory address of the control instruction and its predicted target address is stored in a Branch Target Buffer (BTB), which is a cache organized similar to the set associative array described in the context of L1-IC 210.

The ILD 240 provides a pre-decode phase. The ILD 240 separates the raw byte stream from IFU 220 into a sequence of valid instructions and passes them to the IQ 250. For example, as indicated above, the length of an x86 instruction may vary between 1B to 15B and may reside in any byte address in program memory, thus, requiring segregation of the raw byte stream into instructions of variable lengths. Decoding the length of several instructions per cycle adds a level of complexity, since the start addresses have to be speculatively determined. That is, the fact that the starting address of the second instruction is not known until the length of the first instruction is computed, imposes serialization of the length decoding process, and parallelizing this requires determining the length of each instruction before decoding it. The ILD 240 provides complex logic, based on many parallel and speculative computations, to help achieve such parallelization (although this comes at the price of increased power consumption).

The IQ 250 queues the instructions for the instructions decode phase. The IQ 250 queues the instructions, after the ILD 240 separates the instructions from the stream of raw bytes, for use by ID 260 in the instructions decode phase.

The ID 260 provides the instructions decode phase (which also may be referred to as a dynamic translation phase). In this phase, instructions are read from the IQ 250 and translated into subsequent functionally-equivalent UOPs. This translation is performed by one of several decoders in a set of decoders 261 including a complex decoder 261-C and three simple decoders 261-S 1 - 261-S3 (although it will be appreciated that fewer or more instruction decoders may be used). Herein, the ID 260, including the set of decoders 261, also may be referred to as a Micro Instruction Translation Engine (MITE). The resultant UOPs are passed by the ID 260 to the IDQ 280, through which the UOPs may then enter the backend of the processor. For example, in an x86-based processor, simple instructions can translate into 1-4 UOPs and complex instructions can translate into 5 or more UOPs. It will be appreciated that for processors based on other ISAs, instructions may be translated into other numbers of UOPs.

The UC 270, generally speaking, is a UOP cache that is configured to cache UOPs for instructions previously decoded by the MITE, thereby obviating a need for the MITE to re-decode instructions previously decoded by the MITE in order to obtain the associated UOPs (namely, avoiding the L1-IC->IFU->ILD->IQ->MITE decode path). This type of cache may be referred to as an L0 Instruction Cache (L0-IC), which may store blocks of instructions decoded into UOPs, in units of UC lines. UOP caches benefit from the temporal locality of control flows in a program, due to which previously executed instructions are executed again. Before fetching an instruction address from the L 1-IC 210, it is first looked up in the L0-IC. If the corresponding UC line exists (meaning a hit) in the L0-IC, then the associated UOPs are directly supplied to the IDQ 280 for further execution, thereby completely avoiding the L1-IC->IFU->ILD->IQ->MITE decoding path. If the corresponding UC line does not exist (meaning a miss) in the L0-IC, then the instruction goes through entire complex decoding cycle through the L1-IC->IFU->ILD->IQ->MITE decoding path. The ability to avoid the L1-IC->IFU->ILD->IQ->MITE decoding path in this manner provide significant advantages, as the decoding process from instructions to UOPs (especially for high performance processors) can be costly in terms of circuitry, power consumption, and time, especially where a single complex instruction may perform several operations. It will be appreciated that, since the backend of a superscalar processor can execute several UOPs per clock cycle (e.g., 6 UOPs per cycle), the rate at which UOPs are supplied from the frontend of the processor to the backend of the processor is a key element of performance which may be achieved by high hit rate in the UC 270.

The IDQ 280 queues UOPs to be provided to the backend of the processor. The UOPs that are queued by the IDQ 280 may include UOPs decoded by the ID 260 (MITE) and UOPs delivered from the UC 270.

The backend of the processor 200, although the details are omitted for purposes of clarity, may include various elements such as a reorder buffer (e.g., configured to receive UOPs from the frontend of the processor 200), a unified reservation station having a set of ports configured to direct UOPs to various chains of elements), various elements or chains of elements configured to support execution of UOPs, or the like, as well as various combinations thereof.

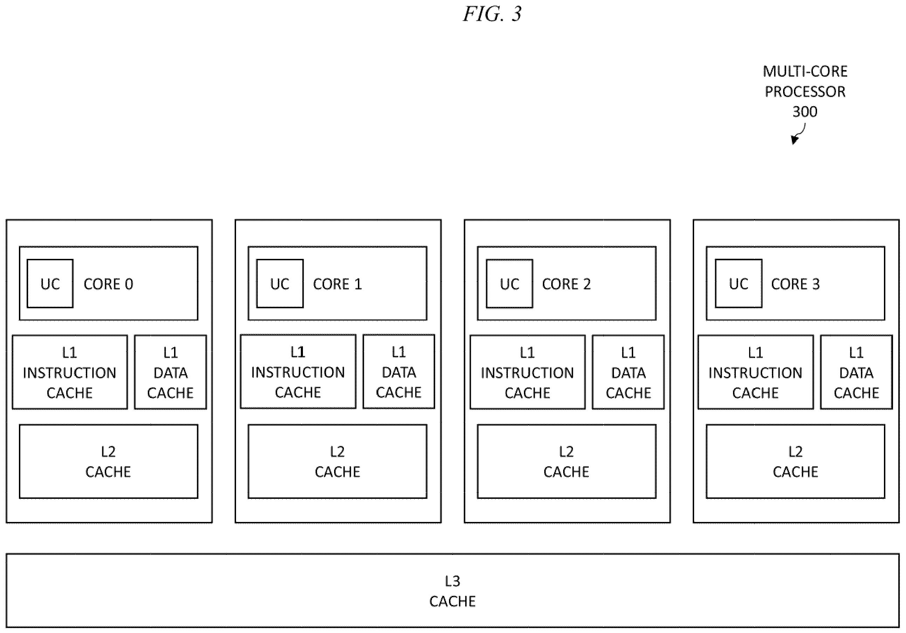

FIG. 3 depicts an example embodiment of a multi-core processor including multiple cores and multiple levels of caches.

The multi-core processor 300 of FIG. 3 includes four cores (denoted as Core 0, Core 1, Core 2, and Core 3) and three levels of caches (denoted as L1, L2, and L3).

In general, a core is configured to operate as a processor (e.g., similar to the only core of a single core processor). Accordingly, it will be appreciated that each of the cores has its own pipeline (e.g., following the conceptual pipeline of FIG. 1, which may be implemented like the pipeline of FIG. 2 or using any other suitable pipeline implementation) that independently fetches, decodes, and executes instructions. Herein, unless indicated otherwise, the term "processor" may be referring to the only core of a single core processor or a core of a multi-core processor.

In general, a cache is a smaller, faster memory, closer to a processor core, which stores copies of the program data or program instructions from frequently used memory locations to reduce the average cost (time or energy). The data or program instructions are stored in the cache by blocks of contiguous memory locations, referred to as cache lines, wherein each cache line is indexed in the cache by the first memory address in the cache line. Caches benefit from the temporal and spatial locality of memory access patterns in a program. Spatial locality refers to use of relatively close memory locations (i.e., within a cache line). Temporal locality refers to the reuse of a specific cache line within a relatively small time duration.

L1 cache is the smallest and nearest to the processor core and, thus, faster than the rest. L1 cache is split into two as follows: an L1 Instruction Cache (e.g., 32KB size or other suitable size) which holds only program instructions and an L1 Data Cache (e.g., 32K size or other suitable size) which holds only program data. L2 caches (e.g., 256KB size or other suitable size) and L3 caches (e.g., 2MB size or other suitable size) are the subsequent levels of caches, which are usually unified caches (meaning that the caches hold both instructions and program data. The L1 Instruction Cache is the IC in fig 1. L3 cache is common for all cores in the processor. Size and access latency grow according to the levels. If the cache line corresponding to a memory address sought is missing in L1 cache, then processor performs lookups in subsequent levels of caches. Main memory is accessed only if the memory address is missing in all caches. Eventually, the missing block is read into a cache line in L1 cache. UC is located inside a core. It will be appreciated that the operation of ICs and UCs in processors may be further understood by first considering the logical organization of an IC in a processor.

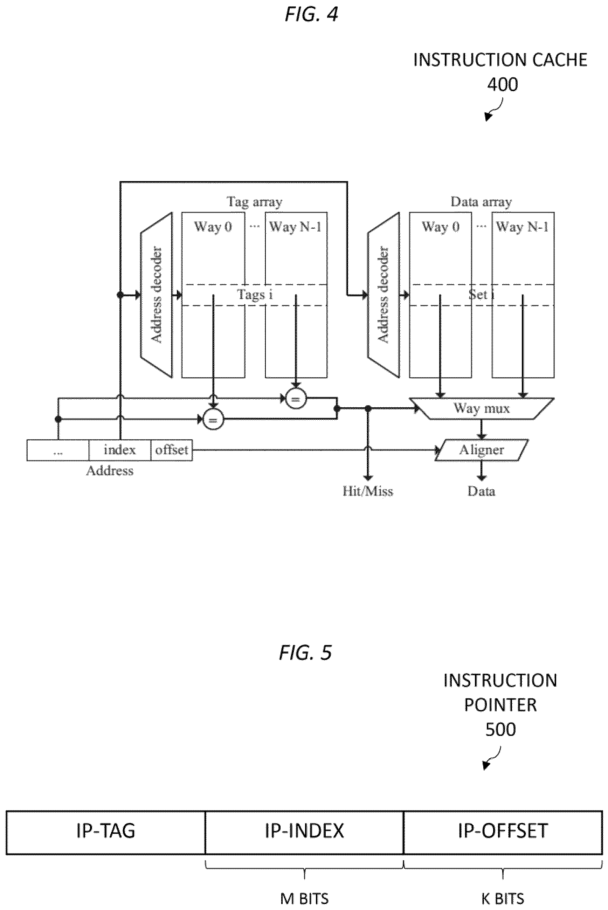

FIG. 4 depicts an example embodiment of an N-way set associative instruction cache for use in a processor.

As illustrated in FIG. 4, the IC 400 includes two main building blocks: the tag array and the data array.

The data array stores the IC lines, while the tag array is used in order to match IPs into data array entries. The data array is logically organized as a group of S number of sets. Each set consists of N number of IC lines (which also may be referred to as "IC blocks"). The number of IC lines in a set is called the "degree of associativity" of the cache. It is noted that a cache of associativity N is a N-way associative cache, wherein each way is an IC line. A memory block is first mapped into a set S*i* by its IP and then placed into any IC line N*j* in the set S*i*. To map a memory block into the IC, the IP is partitioned into three fields as illustrated in FIG. 5.

FIG. 5 depicts an example embodiment of an Instruction Pointer format for an address of an instruction in memory. Here, the term Instruction Pointer (IP) may be used to refer to the address of an instruction in memory. As illustrated in FIG. 5, the IP 500, in order to map a memory block into an IC, is partitioned into the following fields: IP-tag, IP-index, and IP-offset.

The IP-offset field (which also may be referred to as the block offset or, more generally, the offset) includes the *K* least significant bits of the IP, which are used to identify which bytes inside an IC line are to be accessed. Assuming the size of an IC line is *Q* bytes, then *K* = *log*₂(*Q*) bits in the IP-offset field. Herein, unless indicated otherwise, these K bits are denoted as IP-offset.

The IP-index field (which also may be referred to more generally as the index) includes the M next least significant bits of the IP, which are used to identify the set S*i* in the IC. For an IC consisting of *S* sets, *M* = *log*₂(*S*) bits are needed in the IP-index field. Herein, unless indicated otherwise, these M bits are denoted as IP-index.

The IP-tag field includes the remaining bits of the IP. Herein, unless indicated otherwise, these bits are denoted as IP-tag.

Different IC lines can map to the same set S*i* in the IC (they have the same IP-index due to overlapping M bits), so a mechanism is needed to reverse-map IP-indexes to IPs. The tag array serves this purpose. The tag array has the same logical organization as the data array (same number of sets S and associativity N). For each IC line in the data array, the tag array holds some metadata: the IP-tag bits and the state of the IC line (valid, etc.).

To lookup an IP, a set S*i* in both the data and the tag arrays are accessed using the IP-index part, but to know if an IC line within the set corresponds to the given IP, the IP-tag bits must match to an entry in set S*i* in tag array. If the IP-tag bits of the *j*-th entry in set S*i* match, then the correct data is in the *j*-th IC line of the corresponding data array in set S*i* (this is called a *cache hit*)*.* If no IP-tags is in set S*i* match in the tag array, then the requested IC line does not reside in the IC (this is a *cache miss*)*.* In the case of a cache miss, a request to the higher levels of the memory hierarchy must be issued and the processor must wait for the IC line to be installed in the IC before the access can proceed.

As an example, consider an 8-way associative cache with 64 sets with a cache line size of 64B. Then, each cache line would hold a block of 64B of instructions. Here K=6 and M=6. If the processor tries to access an instruction at IP 0xf045 (tag = 0x1e, index = 0x1, offset = 0x5) then it looks for the cache line in set 1 bearing the tag 0x1e. If the IC line is found, then the 5^{th} byte in the IC line is retrieved.

The access to the tag and data array can occur in parallel or serially. In FIG. 4, a whole set is read from the data array while the tag array is accessed. The address is compared with the IP-tag entries to find in which IC line of the set reside the data that needs to be accessed. This information is fed to a multiplexor at the output of the data array (the way multiplexor) that chooses one of the IC lines of the set. Finally, the offset part of the address is used to extract the appropriate bytes from the chosen IC line (this process is called *data alignment*)*.*

The number of bits in the IP-offset field determines the size of an IC line, i.e., the size of an IC line is log₂(*number of bits in IP-offset field*). The set in the IC is selected based on IP-index and an IC line within the set (i.e., a way in the set) is tagged with the IP-tag. In the example in FIG. 4, IP-offset is 4-bits, IP-index is 4 bits, and IP-tag is 8-bits and, thus, for the exemplary IC line, IP-tag = 0xFF and IP-index = 0x0. Thus, the IC line is tagged with 0xFF in the set 0. As evident, all instructions within an IC line share the same IP-tag and IP-index.

The IC suffers from conflict misses when P frequently accessed IC lines map to the same set Si, and the cache associativity N is < P. In that case, one of the valid IC lines in the set Si needs to be evicted out to accommodate a newer IC line. Obviously, the higher the associativity, the less conflict misses the IC will suffer. On the other hand, the more ways the IC has, the bigger the way multiplexor becomes, and this may affect the cycle time of the processor. For example, a modern L1-IC is typically organized as 64 sets x 8 ways x 64B per IC line, totaling to maximum capacity of 32KB of instructions; however, it will be appreciated that various other implementations may be used.

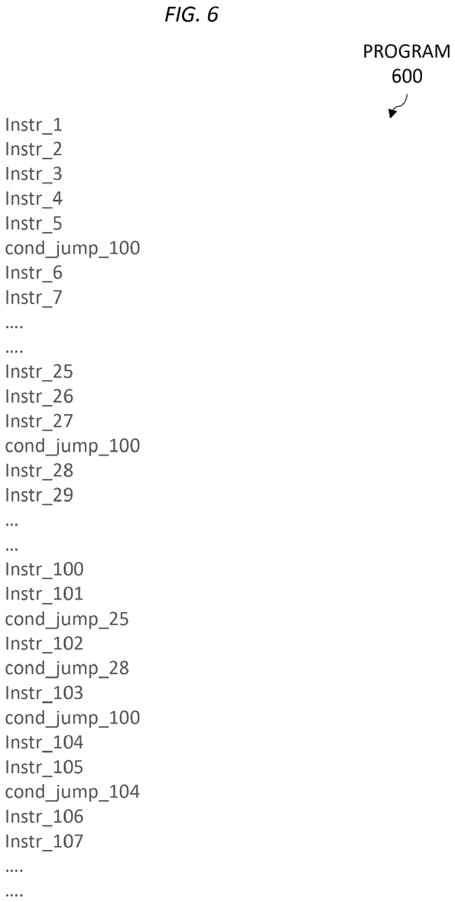

FIG. 6 depicts an example embodiment of a program for illustrating caching of instructions of the program in a micro-operations cache.

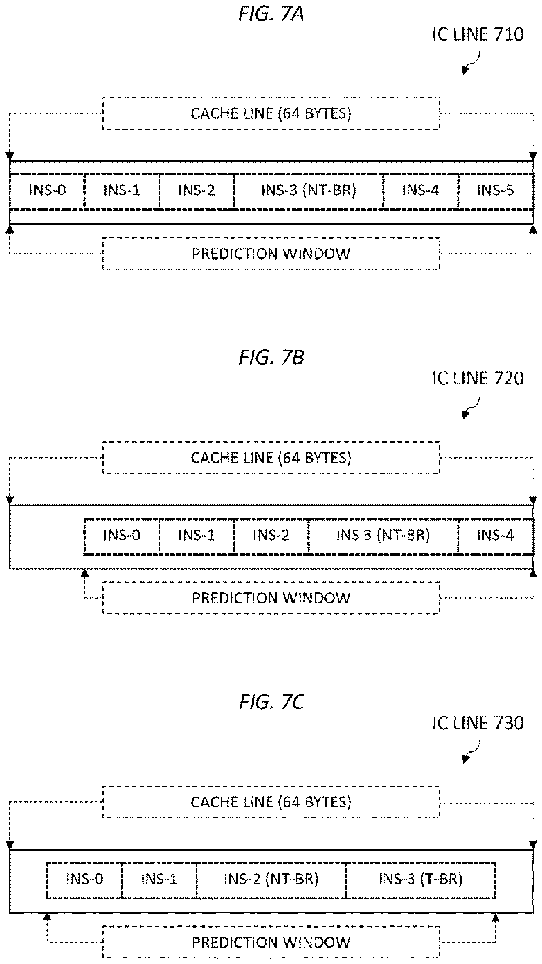

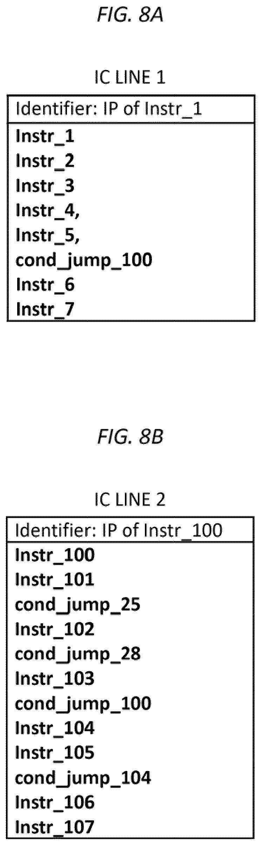

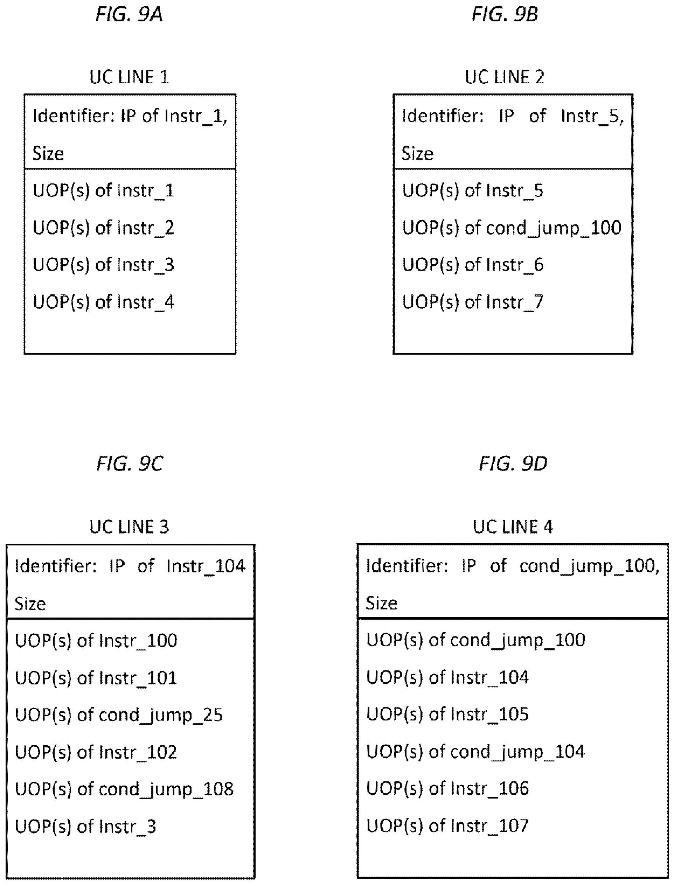

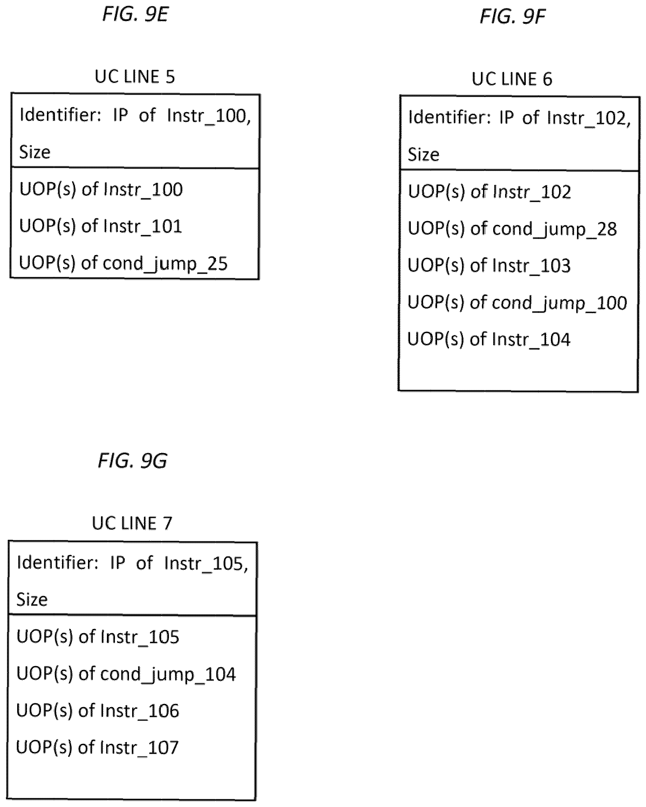

The program 600 of FIG. 6 includes a set of instructions. The size of an instruction can vary, ranging from one byte to multiple bytes. A first execution sequence (of instructions) can be switched to a second execution sequence (of instructions) by a branch instruction, which may be a conditional branch instruction or an unconditional branch instruction. A typical program has a branch instruction in every 6 instructions. For simplicity and without the loss of generality, the program 600 of FIG. 6 illustrates only conditional branch instructions (which are denoted as cond_jump_xx). The generation of prediction windows with respect to IC line boundaries are presented in FIGs. 7A - 7C. The caching of the instructions of the program 600 in an IC by the processor is illustrated with respect to FIGs. 8A - 8B. The construction of the UC lines in the UC as the instructions of the program 600 are fetched and decoded by the processor is illustrated with respect to FIGs. 9A - 9G.

While executing a program, such as the program 600, BPs in the front-end of the processor generate Prediction Windows. Each Prediction Window (PW) dictates a range of consecutive instructions (marked by start address and end address) that are predicted to be executed by the BP. PW is represented by the tuple {Start_IP, End_IP_Offset}, which means instructions from Start_IP until (Start_IP + End_IP_Offset). The front-end fetches instructions based on PWs. The PW is sent to both the IC and UC (as illustrated in FIG. 1). In the case of a hit in the UC, UOPs are dispatched to the back-end from UC line(s) that stored the PW, and the IC lookup is cancelled. In case of miss in the UC, the instructions are fetched from IC or memory (if missed in IC) and then follow the usual path of decoding, storing the UOPs in the UC, and dispatch of the UOPs to the back-end. A PW generated by the BP can start anywhere in an IC line and can terminate at the end of an IC line or anywhere in the middle of an IC line if a predicted taken branch or a predefined number of predicted not-taken branches have been encountered. Example illustrating where a PW can start and end with respect to an IC boundary line are presented with respect to FIGs. 7A - 7C.

FIGs. 7A - 7C depict example embodiments of prediction windows with respect to IC line boundaries. In the IC Line 710 of FIG. 7A, the PW starts at the beginning and terminates at the end of the IC Line 710. The IC Line 710 includes a not taken conditional branch instruction INS-3. In the IC Line 720 of FIG. 7B, the PW starts in the middle and terminates at the end of the IC line. This happens when the previous PW included a predicted taken branch whose target address falls in the middle of an IC line. The PW is terminated at the end of the IC Line 720. The IC Line 720 includes a not taken conditional branch instruction INS-3. In the IC Line 730 of FIG. 7C, the PW starts in the middle and ends before the end of the IC Line 730 due to a predicted taken conditional jump instruction INS-3. The IC Line 730 includes a not taken conditional branch instruction INS-2.

FIGs. 8A - 8B depict example embodiments of cache lines in an instruction cache of a processor for the program of FIG. 6.

It is noted that, since the fetching stage is not aware of syntax and semantics of instructions, it is not necessary that an IC line terminate at the boundary of a multi-byte instruction. Thus, an instruction can stride across two IC lines. For simplicity and without the loss of generality, embodiments of IC lines are described with instructions starting and terminating at the boundary of an IC line.

The processor starts fetching from Instr_1, i.e., the first instruction of the program. At this point, the BP has not yet seen any instruction of the program, so the BP does not have any record of the PW that starts at Instr_1. So, the BP generates the PW based on the maximum size of an IC line. Let's say the number of bytes starting at Instr_1 until the end of Instr_7 fits into an IC line, so the PW is {Start_IP = IP of Instr_1, End_IP_Offset = IP of Instr_7 - IP of Instr_1} which is denoted as PW-1. This means that all these instructions share the same IP-Tag and IP-Index. The BP sends streaming requests for the PW to both the IC and the UC. Of course, the PW will be miss in both IC and UC. So, when the processor fetches Instr_1 from memory, the processor caches Instr_1 to Instr_7 in an IC line addressed by IP of Instr_1, which is depicted as IC Line 1 in FIG. 8A.

Assume that, after the execution of cond_jump_100, the branch is taken. So, the processor starts fetching from Instr_100. There is a branch misprediction, so PW-1 is updated to {Start_IP = IP of Instr_1, End_IP_Offset = IP of cond_jump_100 - IP of Instr_1}. When the processor starts fetching from Instr_100, the BP does not have any record of the PW that starts at Instr_100. Here, assume that Instr_100 until the end of Instr_107 fits into an IC block. The BP sends a streaming request for the PW to both the IC and the UC. Of course, the PW will be miss at both the IC and the UC. So, when the processor fetches Instr_100 from memory, it caches Instr_100 to Instr_107 in an IC Line 2 addressed by IP of Instr_100, which is depicted as IC Line 2 in FIG. 8B. The PW {Start_IP = IP of Instr_100, End_IP_Offset = IP of Instr_107 - IP of Instr_100} is denoted as PW-2. Assume that, when _jump_25, condjump_28, condjump_100, and cond jump_25 are executed, each resulted in branch not taken. So PW-2 is predicted correctly.

The PWs streamed from the IC are decoded to UOPs which are supplied to the execution stage. The UC stores the UOPs of a PW received from the decode stage in one or more smaller sized blocks. Each such block is called a "UC line". Given that the PW drives the creation of UC lines, most of the PW terminating conditions apply to UC line creation as well (e.g., except for the one breaking a PW due to maximum number of predicted not-taken branches). The instruction semantic awareness of a UC is the key difference from an IC, as an IC simply stores blocks of instruction memory. UC line terminating conditions include: (1) IC line boundary, (2) predicted taken branch, and (3) maximum number of UOPs allowed per UC line. These simple rules allow high bandwidth fetching from the UC since, once there is a hit in the UC, then the entire UC line can be supplied to the execution stage without worrying about a change of execution sequence in the middle of a UC line.

Herein, unless indicated otherwise, an address of an instruction in memory is referred to as an Instruction Pointer (IP). A UC line is identified by the IP of the parent instruction of the first UOP in the UC line; other than that no correlation exists between the UOPs in a UC line and their corresponding parent instructions, and it is noted that such correlation is not required since the entire UC line is supplied to the execution stage. As a result, UOPs in a UC line cannot be looked up by the IPs of their parent instructions. UOPs of an instruction cannot span across two UC lines, so a UC line must begin with the first UOP of an instruction.

UC lines are typically organized in an N-way associative array, similar to an IC as in FIG. 4. The Tag Array is an N-way set associative array wherein each entry contains IP of an UC line, its validity, size (i.e., IP of last instruction in the UC line - IP of first instruction in the UC line), and so forth. An entry needs to keep the "size" so that the processor can increment the IP by the size of the UC line to look for the next UC line in case the UC line is terminated by condition 'c'. The data array is an N-way set associative array wherein an entry contains the UC line (block of UOPs) that corresponds to the entry in the tag array. The processor first looks up the tag array by the IP of an instruction. If tag array is a hit, then the corresponding entry in the data array supplies all the UOPs in the UC line to the execution unit.

For each UC line in the data array, the tag array holds some metadata: the IP-tag and IP-offset bits and the state of the UC line (validity, size, and so forth). Note that the IC tag array entry keeps only the IP-tag since the IC lines are aligned by the fixed size of an IC line, so the IP-offset field is always zero for the first address in the IC line; however, the UC tag array entry needs to keep both IP-tag and IP-offset bits since a UC line always starts with the first instruction of an execution sequence and that instruction can be at any offset within an IC line.

To lookup an IP in UC, a set S*i* in both the data and the tag arrays are accessed using the IP-index part; however, to know if an UC line within the set corresponds to the given IP, the IP-tag and IP-offset bits must match to an entry in set S*i* in tag array. If the IP-tag bits and IP-offset bits of the *j*-th entry in set S*i* match, then the correct data is in the *j*-th UC line of the corresponding data array in set S*i* (this is called a *UC hit*)*.* If no IP-tags in set S*i* match in the tag array, then the requested UC line does not reside in the UC (this is a *UC miss*)*.* In the case of a UC miss, a request to fetch and decode the instruction must be issued. Given that UC lookup is always triggered by the BP for a PW, the IP for lookup is generated by the starting address of the PW. In case of a hit, the entire UC line is supplied to execution stage in a single clock cycle; however, in scenarios where a PW spans across multiple UC lines (due to terminating condition '3' discussed above), the UC lines are dispatched in consecutive clocks. The construction of the UC lines in the UC as the instructions of the program 600 are fetched and decoded by the processor in units of PWs is illustrated with respect to FIGs. 9A - 9G.

FIGs. 9A - 9G depict example embodiments of cache lines in a micro-operations cache of a processor for the program of FIG. 6.

The processor starts fetching from Instr_1 to Instr_7 of program 600, i.e., PW-1. Initially, there are no valid cache lines in the UC (i.e., the UC is empty). Since no UC line is found for the IP of Instr_1 (i.e., the address of PW-1), the processor starts fetching and decoding from Instr_1 until Instr_7. It is noted that, by the time the decoding was in progress, the processor started fetching the next PW, likely the instructions subsequent to Instr_7, which is not described here for simplicity.

While the decoded UOPs for PW-1 are dispatched for execution, the UOPs are also sent to be stored at the UC. For example, assume that the UOPs for instructions Instr_1 until Instr_4 fill an entire UC line. So, the UC allocates a new UC line for storing the decoded UOPs of Instr_1 until Instr_4, which is terminated by condition '3'. This UC line is denoted as UC Line 1. The IP/Identifier of the UC Line 1 is IP of Instr_1. Additionally, the UC Line keeps a 'size' field in its metadata that encodes the (address of last instruction in the UC line - address of the first instruction in the UC line). The size field is used when a PW spans more than one UC line. The identifier of the next UC line in a PW is calculated as (identifier of current UC line + size). The UC Line 1 is depicted in FIG. 9A.

The UC needs more UC lines to store the remaining UOPs from Instr_5 to Instr_7. Assume that the UOPs of Instr_5 to Instr_7 can fit into a UC line. Since no UC line is found by the IP of Instr_5, the UC allocates a new UC line for these UOPs, which is denoted as UC Line 2. The IP of the UC Line 2 is IP of Instr_5. The UC Line 2 is depicted in FIG. 9B.

Assume that the execution of condjump_100 leads to a branch being taken. The UOP(s) of Instr_6 and Instr_7 are discarded by the execution stage and branch misprediction is notified to the BP. The BP then updates the PW-1 from Instr_1 to condjump_100. The BP also invalidates the UC Line 1 and UC Line 2, so that when PW-1 is fetched the next time, the instructions will be decoded afresh and the resultant UOPs will be stored in the UC as per the updated PW-1. So, the branch misprediction penalty includes fetching and decoding of instructions in the impacted PW again. The updated PW-1 will allocate UC Line 1 as shown in FIG. 9A, and UC Line 2 similar to FIG. 9B except that UC Line 2 includes Instr_5 until condjump_100.

The condjump_100 instruction switches the execution sequence to start from instr_100. The processor predicts the PW-2 from Instr_100 until Instr_107 as it fills one IC line. Since no UC line is found for the IP of Instr_100, the processor starts fetching and decoding from Instr_100 until Instr_107. The decoded UOPs are supplied to the execution stage as well as sent to the UC. The UOPs for Instr_100 until Instr_103 fill the size of a UC line. So, a new UC line is allocated for these UOPs, which is denoted as UC Line 3. The IP of the UC Line 3 is IP of Instr_100. The UC line is terminated by condition '3'. The UC Line 3 is depicted in FIG. 9C.

The UC needs more UC lines to store the remaining UOPs from cond_jump_100 until Instr_107. Assume that the UOPs of cond_jump_100 until Inst_107 can fit into a UC line. Since no UC line is found by the IP of cond_jump_100, the UC allocates a new UC line for these UOPs, which is denoted as UC Line 4. The IP of the UC Line 4 is IP of cond_jump_100. The UC Line 4 is depicted in FIG. 9D.

When conditional branch instructions in UC Lines 3 and 4 are executed, assume that the branches are not taken. So, PW-2 was correctly predicted by the BP and, thus, the UC Lines 3 and 4 continue to be stored by the UC.

As noted above, in a traditional UC, misprediction of a conditional branch within a PW requires invalidation of all UC lines in the PW. When the resized PW is iterated by the processor, the UC will be a miss and all instructions of the resized PW need to be fetched and decoded afresh. Accordingly, the UC is replenished by the UOPs of the resized PW. If the conditional branch is continually mispredicted on every iteration of the PW then UC lines will be continually invalidated. As a result, all instructions in the resized PW are continually fetched from IC, decoded, and the resultant UOPs are stored in UC. This essentially defeats the very purpose of the UC. This may be further understood by further considering the example of execution of program 600.

Take the example of PW-2 (from Instr_100 until Instr_107) which generated UC Lines 3 and 4 in FIGs. 9C and 9D, respectively. Assume that in a second iteration of PW-2, the condjump_25 had taken the branch. This invalidates the UC Lines 3 and 4. The PW-2 is then resized from Instr_100 until condjump_25. In a third iteration of PW-2, the UOPs of PW-2 will be miss in the UC, so Instr_100 until cond jump_25 need to be fetched from the IC, decoded, and stored into the UC again. Assume that the UOPs are stored in UC Line 5. The UC line is terminated by condition '2'.

Assume that, when cond jump_25 is executed, the branch is not taken. So, the branch misprediction updates the PW-2 from Inst_100 to Instr_107. Since the instructions subsequent to condjump_25 (i.e., Instr_102 until Instr_107) are miss in UC, those instructions need to be fetched from IC and decoded again. Assume that the UOPs of Instr_102 until Instr_107 do not fits into a single UC line and, thus, are stored in the two lines UC Line 6 and UC Line 7 as shown in FIG. 9F and FIG. 9G, respectively.

Assume that, in a fourth iteration of PW-2, the condjump_25 executed as the taken branch. The misprediction invalidates the UC Lines 5, 6, and 7. In a fifth iteration of PW-2, it will be miss in UC, so Instr_100 until condjump_25 need to be fetched, decoded, and stored into UC again. This results in the instructions in PW-2 being fetched from IC, decoded, and stored as in UC Line 5 again.

Assume, as an example, that the processor is a network packet processor and the program in FIG. 6 is iterated for every packet. Further assume that the outcome of condjump_25 is dependent on the type of a packet. Further assume that the network processor receives varieties of packets in random fashion. In that case, cond jump_25 is often mispredicted, which results in continual invalidation of UC lines generated by PW-2. This severely degrades the processor performance, drastically increases power consumption, and adds significant latency into packet processing. It will be appreciated that such problems also may be experienced in various other applications in which processors may be employed.

Various example embodiments support efficient utilization of a UC of a processor based on configuration of the processor such that UC lines created by a PW are not invalidated on misprediction of a branch instruction (meaning that the branch is predicted to be not taken when fetching the instruction but is taken when executed or that the branch of the branch instruction is predicted to be taken when fetching the instruction but is not actually taken when executed). The UC is completely immune to dynamic resizing of a PW due to changes in prediction of its conditional branch instructions. The UC can stream the exact set of UOPs for any size of the PW.

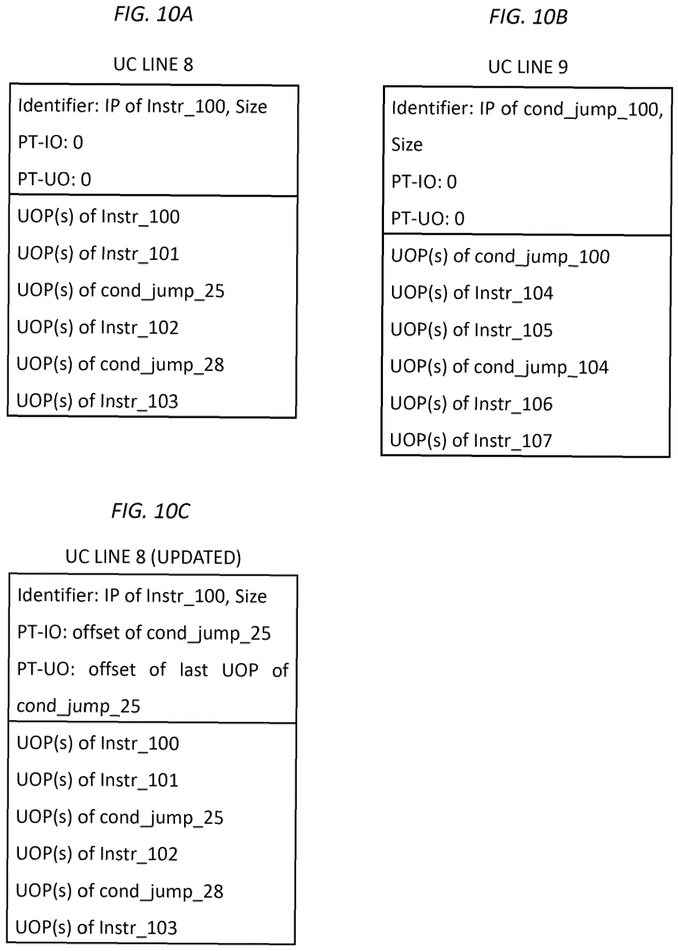

The configuration of the processor such that UC lines created by a PW are not invalidated on misprediction of a branch instruction may be based on configuration of the UC such that each UC line maintains a new tuple as additional information in the metadata of the UC line as follows: {preterminate_IP_offset (PT-IO), preterminate_last_UOP_offset (PT-UO}. The 'preterminate_IP_offset' (PT-IO) means the IP of an intermediate instruction in the UC line where "intermediate" here refers to the instruction that is neither the first or the last instruction in the UC line. It is noted that herein, unless stated otherwise, the phrase "instruction in a UC line" means UOPs of an instruction stored in the UC line. The 'preterminate_last_UOP_offset' (PT-UO) means the offset of the last UOP of the intermediate instruction in the UC line which corresponds to preterminate_IP_offset. If PT-IO is 0, the entire UC line is streamed to the execution unit. If PT-IO is non-zero, the UOPs in the UC line until the PT-UO are streamed to the execution unit. Basically, the tuple adds the capability to stream a subset of UOPs from the beginning of the UC line until an intermediate instruction. The use of the tuple within the metadata of UC lines may be further understood by further considering execution of the program 600, where the construction of the UC lines in the UC is illustrated with respect to FIGs. 10A - 10C.

FIGs. 10A - 10C depict example embodiments of cache lines in a micro-operations cache of a processor for the program of FIG. 6, where the processor is configured such that cache lines created by a prediction window are not invalidated on misprediction of a branch instruction. FIG. 10A depicts UC Line 8, which is UC Line 3 of FIG. 9C, but with the tuple added to the metadata. FIG. 10B depicts UC Line 9, which is UC Line 4 of FIG. 9D, but with the tuple added to the metadata. FIG. 10C depicts a modification of UC Line 8, where the PT-IO and PT-UO are updated for condjump_25. When this UC Line 8 is hit then UOPs from instr_100 until condjump_25 only are streamed out to the execution stage.

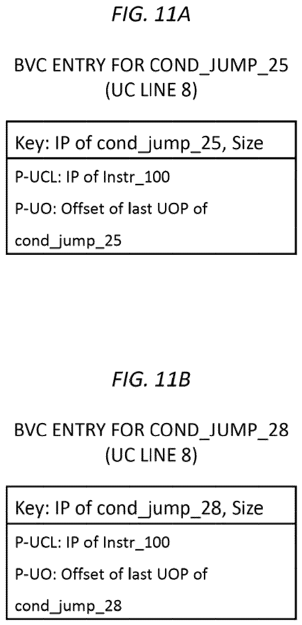

The configuration of the processor such that UC lines created by a PW are not invalidated on misprediction of a branch instruction may be based on configuration of the processor to maintain an auxiliary cache that is auxiliary to the UC. In the auxiliary cache, a cache entry maintains the mapping of the IP of each intermediate conditional branch instruction in a UC line to the tuple indicating the location of the instruction within the UC line, which is as follows: {IP of parent UC line (P-UCL), offset of the last UOP of the conditional branch instruction in the UC line (P-UO)}. This auxiliary cache is referred to herein as the Branch Vector Cache (BVC) as the cache stores the vector (co-ordinate) of intermediate conditional branch instructions in their parent UC lines. While storing UOPs in a UC line, if an intermediate conditional branch instruction is encountered, then an entry is allocated in BVC by the IP of that instruction, i.e., the IP of the instruction is the key for looking up the entry. Additionally, the key also includes the size (number of bytes) of the conditional branch instruction, so that the same entry can be reused for lookup by IP of the instruction subsequent to the conditional branch instruction (i.e., = IP of the conditional branch instruction + size). The data portion of the entry includes the tuple {P-UCL, P-UO}. Note that (P_UO + size of a UOP) is the offset to the start of UOPs of the instruction subsequent to the conditional branch instruction. When the BVC is looked up for an IP then for each potential candidate entry, the following steps are performed: (1) match the IP to the IP of the entry and, if there is a match, then the entry is hit, otherwise, proceed to the next step and (2) match the IP to the (IP of the entry + size) and, if there is a match, then the entry is a hit, otherwise a miss is declared. The operation of the BVC may be further understood by further considering execution of the program 600, where the generation and use of BVC entries of the BVC is illustrated with respect to FIGs. 11A - 11B.

FIGs. 11A - 11B depict example embodiments of entries in a branch vector cache for the cache line of FIG. 10A in the micro-operations cache of the processor for the program of FIG. 6, where the processor is configured such that cache lines created by a prediction window are not invalidated on misprediction of a branch instruction.

If an entry in BVC is evicted then the parent UC line of the BVC entry needs to be evicted from UC as well. If a UC line is evicted then all of the corresponding BVC entries of the UC line need to be evicted. Basically, BVC and UC must be in sync with respect to the state of the common conditional branch instructions. For example, each of the PT-IO and PT-UO fields can be 5-bits of size to accommodate offsets up to 32 for 32B sized UC line (although it will be appreciated that other sizes can be supported). This organization adds flexibility in the UC for handling dynamic resizing of PWs. This may be further understood by further considering the example related to execution of the program 600 of FIG. 6, which is discussed further below.

In continuation of the example, initially, PW-2 includes Instr_100 until Instr_107, which generated UC Lines 8 and 9 in FIGs. 10A and 10B, respectively. Assume that, in a second iteration of PW-2, the condjump_25 had taken the branch. The PW-2 is then resized from Instr_100 to condjump_25. In a third iteration of PW-2, the BP will send a request to UC for PW-2 = {Start_IP = IP of Instr_100, End_IP_Offset = IP of cond jump_25 - IP of Instr_100}. The UC finds the UC Line 8 by the Start_IP, but the size of UC Line 8 is greater than the End_IP_Offset. So, the UC needs to refactor the UC Line 8 to be able to stream the UOPs until the UOP(s) that belong(s) to the End _IP_Offset. The mismatch of size and End_IP_Offset triggers the following steps: (a) a lookup in the BVC for the IP = (Start_IP + End_IP_Offset}, which hits the BVC entry in FIG. 11A and reads its P-UC and P-UO, (b) then the UC is looked up for the UC Line by the P-UC as the identifier, which hits UC Line 8 of FIG. 10A, and the PT-IO of the UC Line 8 is updated to End _IP_Offset of PW-2 and the PT-UO of the UC Line 8 is updated to P-UO, with the updated UC Line 8 being shown in FIG. 10C, and (c) the UOPs of the UC Line 8 until the PT-UO are streamed to the execution stage.

Here, assume that step (a) requires one clock cycle (it may require two depending on the size of BVC and on the implementation). Step (b) requires one clock cycle. Step (c) may be done in parallel to step (b). The UC lookup before step (a) that detected the mismatch of size and End_IP_Offset took one clock cycle. So, overall it required 3 clock cycles to stream UOPs to execution when a PW is resized. By contrast, as discussed above, an existing processor may take up to 20-30 clock cycles (depending on depth of the pipeline in the front-end, which is growing in every generation) to stream UOPs on every resizing of a PW.

In continuation of the example, when cond jump_25 is executed, assume that the branch is not taken. So, the branch misprediction updates the PW-2 again from Inst_100 to Instr_107. As a result, the BP sends a request to the UC to stream {Start_IP = IP of Instr_102, End_IP_Offset = IP of Instr_107 - IP of Instr_102}. This is referred to as a "mid-expansion of a PW". The UC lookup by the IP of Instr_102 is a miss, which triggers the following steps: (d) a lookup in BVC for the Start_IP, which hits the BVC entry in FIG. 11A since its (key + size) matches Start_IP, and then the P-UC and P-UO of the BVC entry are read, (e) the UC is looked up for the UC line using the P-UC as the identifier, which hits UC Line 8, and, since End_IP_Offset in the request is larger than the size of the UC Line 8, the PT-AO and PT-UO are updated to 0, as illustrated in UC Line 8 depicted in FIG. 10A, and (f) the UOPs of the UC Line 8 starting from (P-UO + size of UOP) until the end are streamed to execution.

So, like illustrated in steps (a)-(c), the steps (d)-(f) take around three clock cycles. Since End_IP_Offset in the request is larger than the size of UC Line 8, the next time the UC line is looked up by Start_IP + size then it hits UC Line 9 in FIG. 10B. The (End_IP_Offset - size of UC line 8) matches the size of UC Line 9, so the entire UC Line 9 is streamed to the execution stage in one clock cycle. It is noted that an existing processor would have required rebuilding of new UC lines after fetching and decoding the instructions from Instr_102 to Instr_107, which would have taken 20-30 clock cycles.

In continuation of the example, assume that, in a fourth iteration of PW-2, the condjump_25 is executed as the taken branch. In a fifth iteration of PW-2, BP will send a request to UC for PW-2 = {Start_IP = IP of Instr_100, End_IP_Offset = IP of cond jump_25 - IP of Instr_100}. This will result in the same steps as in a-c. So, UOPs are streamed in 3 clock cycles as opposed to 20-30 clock cycles in existing processors.

Assume, as an example, that the processor is a network packet processor and that the program in FIG. 6 is iterated for every packet. Further assume that the outcome of the cond jump_25 instruction is dependent on the type of a packet. Further assume that the network processor receives varieties of packets in random fashion. In that case, cond_jump_25 is often mispredicted, which results in continual updating of PT-AO and PT-UO of UC Line 8 in three clock cycles rather than continual invalidation of UC lines that results in 20-30 cycles of penalty.

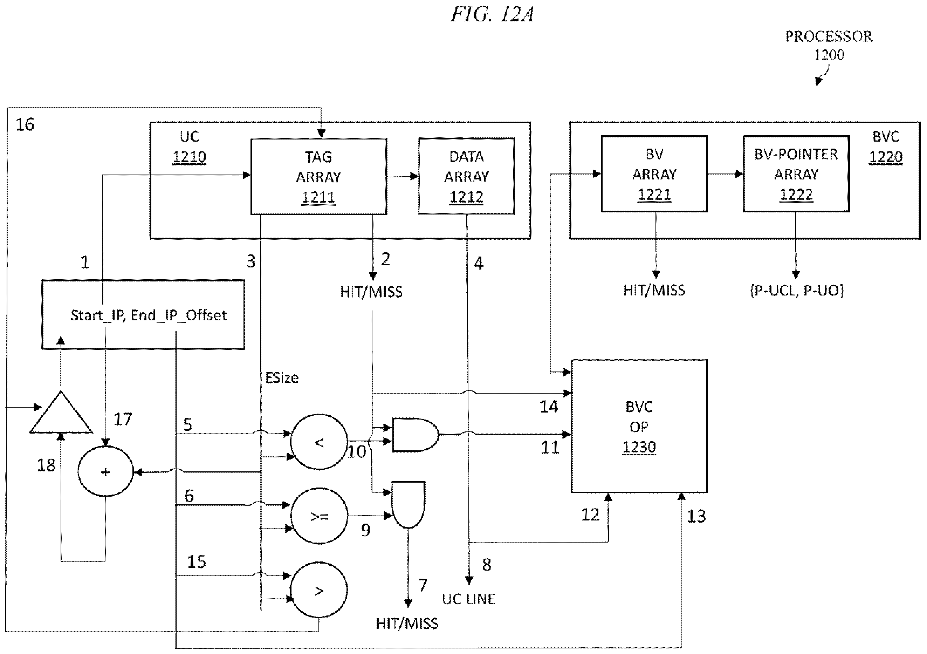

FIGs. 12A - 12C depict an example embodiment of a processor including a micro-operations cache and a branch vector cache where the processor is configured such that cache lines created by a prediction window are not invalidated on misprediction of a branch instruction.

FIGs. 12A - 12C each depict a processor 1200. FIGs. 12A - 12C each depict logical organization of components of the processor 1200 which may support different operations (relevant sets or subsets of the components are depicted in FIGs. 12A - 12C for purposes of clarity in describing different operations which may be performed).

In FIGs. 12A - 12C, the processor 1200 is depicted as including a UC 1210, a BVC 1220, and a BVC OP 1230. The UC 1210 operates as the micro-operations cache of the processor 1200 that is configured to support operations which aid in preventing invalidation of the cache lines created by a PW on misprediction of a branch instruction. The BVC 1220 acts as an auxiliary cache of the processor 1200 which aids in preventing invalidation of the cache lines created by a PW on misprediction of a branch instruction. The UC 1210 includes a tag array 1211 and a data array 1212. The BVC 1220 includes a BV array 1221 and a BV-pointer array 1222. It will be appreciated that the processor 1200 may include various other elements which may be configured to support various other operations which may be performed so that the processor is configured such that cache lines created by a prediction window are not invalidated on misprediction of a branch instruction.

In FIGs. 12A - 12C, the UC 1210 can be implemented as an N-way set associative tag array 1211 and data array 1212. While decoding and storing intermediate conditional branch instructions to a UC line in the UC 1210, the IP of the instruction is added as an entry into the BVC 1220. The BVC 1220 is implemented as an N-way set associative BV array 1221 and BV-pointer array 1222, where an entry of the BV array 1221 includes the IP of an intermediate branch instruction in a UC line and its size while the corresponding entry in the BV-pointer array 1222 stores at least the tuple {P-UCL, P-UO}.

In FIGs. 12A - 12C, when a Start_IP of a PW is a hit in the tag array 1211 but the End_IP_Offset is smaller than the size of the UC line, the processor 1200 looks up the end IP (= Start_IP + End_IP_Offset) in the BV array 1221. If the BV array 1221 is hit then the corresponding entry in the BV-pointer array 1222 yields P-UCL and P-UO. Then, the UC line is looked up by the P-UCL. In the UC Line, PT-IO is updated to End_IP_Offset and PT-UO is updated to P-UO. Then, all UOPs in the UC line until the P-UO are supplied to the execution unit.

In FIGs. 12A - 12C, when a Start_IP of a PW is a miss in the tag array 1211, the processor 1200 looks up the Start_IP in (key + size) of potential candidate entries in the BV array 1221. If the BV array 1221 is a hit, then the corresponding entry in the BV-pointer array 1222 yields P-UCL and P-UO. Then the UC line is looked up by the P-UCL. If the End_IP_Offset is greater than or equal to the size of the UC Line then PT-IO and PT-UO in the UCL line are updated to 0. Based on the P-UO, the UOPs in the UC line are supplied to the execution unit.

It is noted that the size of the BV array 1221 may need to be larger than the tag array 1211 since each UC line can generate multiple entries in the BV array 1221 and, thus, that the size of the BV array 1221 is a determining factor in its lookup time.

FIG. 12A depicts an example embodiment of a processor including a micro-operations cache and a branch vector cache for illustrating a process for performing a UC lookup for a PW. In FIG. 12A, the processor 1200 is depicted as including the UC 1210, the BVC 1220, and the BVC OP 1230. It will be appreciated that the processor 1200 may include various other elements which may be configured to support various other operations which may be performed so that the processor is configured such that cache lines created by a prediction window are not invalidated on misprediction of a branch instruction.

In FIG. 12A, the process of a UC lookup is illustrated. At clock cycle T, the tuple {Start_IP, End_IP_Offset} of a PW is received for UC lookup. Start_IP is input into Tag Array (step 1). At the end of clock cycle T, the UC delivers the following two outputs: (1) an indication as to whether Start_IP is hit or miss in the tag array 1211 (step 2) and (2) an indication of the effective size ("ESize") of the UC line if the Start_IP is a hit (step 3). It is noted that, here, ESize is defined as follows: if PT-IO is non-zero then ESize = PT-IO in the tag array entry, otherwise ESize = size in tag array entry, i.e., the offset of the last instruction in the UC line. Step 4 is the UC line (output from the data array 1211) if the Start_IP is a hit. The output of the data array contains UOPs for instructions from Start_IP until Start_IP + Size.

The End_IP_Offset is input in step 6 to a logical function that checks if the End_IP_Offset is greater than or equal to the ESize (from step 3). The output of the logical function (step 9) is input to a logical AND function that takes the second input from the hit/miss signal of step 2. The output of this function (step 7) is the final hit/miss of the UC. Basically, if there is a hit in step 2 and End_IP_Offset is equal to or greater than the ESize then it means the UC line has all the required UOPs. Then, step 7 declares the final hit signal and the UC line (from step 4) is delivered as the final UC line (step 8).

The End_IP_Offset is input in step 15 to a logical function that checks if the End_IP_Offset is greater than the ESize (from step 3). Output of the logical function (step 16) in input to the tag array 1211, which if 1 then resets the PT-IO and PT-UO fields of the current entry to 0. The Start_IP (step 17) is added to ESize output (step 3) and the result is fed back (step 18) to a gate/switch. The gate sends the result as the new Start_IP for lookup in UC tag array in the clock cycle (T+1) if output of step 16 is 1. Basically, this is the case that handles PW expansion because previously the PW terminated at the instruction at offset ESize.

The End_IP_Offset is input to step 5. Step 5 checks if the End_IP_Offset is less than ESize (from step 3). If result is true (step 10) and there is a hit then step 11 triggers lookup of (Start_IP + End_IP_Offset) in the BVC 1220 in the next clock cycle by the key of its entries. Basically, this is the case that handles shrinking of the PW. Step 11 is input to BVC OP 1230. The BVC OP 1230 includes the logic circuity required to initiate a lookup in the BVC 1220 in the next clock cycle. The UC line is stored in a temporary cache (step 12) in the BVC OP 1230 for evaluation after the lookup in the BVC 1220 is completed. The (Start_IP + End_IP_Offset) is stored in the BVC OP 1230 as well (step 13). Storing both in the BVC OP 1230 may require one clock cycle, so operations will complete after clock cycle (T+1). While (Start_IP + End_IP_Offset) is stored in BVC OP 1230, it is also issued for BVC lookup at clock cycle (T+1). Instead of storing in a cache, an implementation of the BVC OP 1230 may also add a delay element to delay the UC line and (Start_IP + End_IP_Offset) by a clock cycle.

If there is a miss (in step 2) then step 14 triggers a lookup of (Start_IP + End_IP_Offset) in the BVC 1220 in the next clock cycle by the (key + size) of its entries. The (Start_IP + End_IP_Offset) is stored in the BVC OP 1230 (step 13) in the same way as described above.

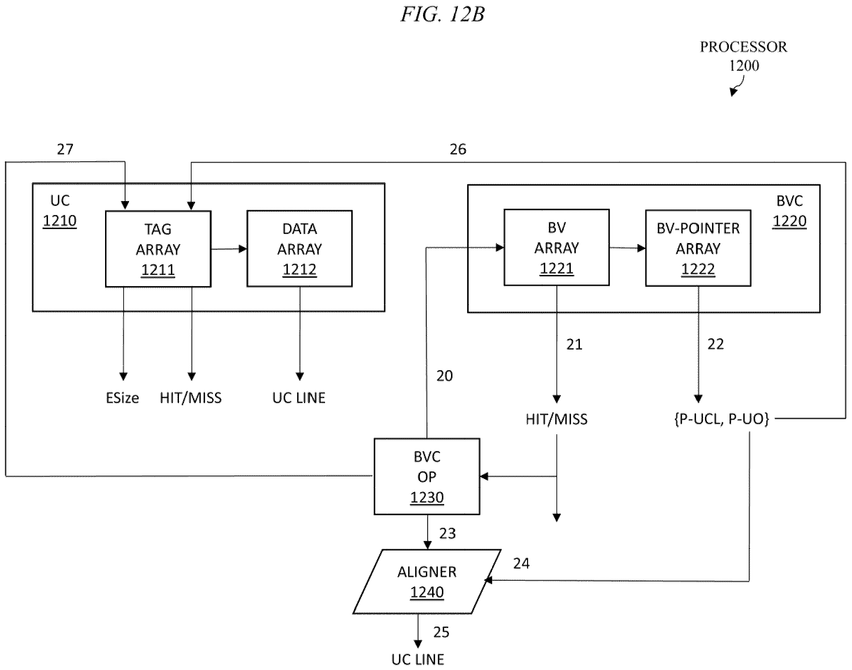

FIG. 12B depicts an example embodiment of a processor including a micro-operations cache and a branch vector cache for illustrating a process for handling shrinking of a PW. In FIG 12B, the processor 1200 is depicted as including the UC 1210, the BVC 1220, the BVC OP 1230, and a data aligner 1240. It will be appreciated that the processor 1200 may include various other elements which may be configured to support various other operations which may be performed so that the processor is configured such that cache lines created by a prediction window are not invalidated on misprediction of a branch instruction.

In FIG. 12B, the process of handling shrinking of a PW is illustrated. In FIG. 12B, a lookup in BVC 1220 in clock cycle (T+1) is performed when End_Offset is less than the ESize of the UC line retrieved in clock cycle T. The BVC OP 1230 issues the End_IP_Offset to the BV array 1221 for lookup by the key of its entries (step 20). By the end of clock cycle (T+1), the BVC 1220 delivers the following two outputs: (1) the BV array 1221 delivers the hit/miss signal (step 21) and (2) the BV-pointer array 1222 delivers the tuple {P-UCL, P-UO} (step 22) if there is a hit.

In FIG. 12B, the hit/miss signal (step 21) is input to the BVC OP 1230 and, if there is a hit, then it delivers the cached UC line (in step 23). The UC line from step 23 is input to the data aligner 1240. The P-UO from step 22 is input to the data aligner 1240, which curtails the UOPs in the UC line until P-UO and delivers the final set of UOPs to the execution stage (step 25). Thus, the final set of UOPs is delivered in two clock cycles. The P-UO (step 26) and the End_IP_Offset (step 27) are input to the tag array 1211 of the UC 1210 to write into the PT-UO and PT-IO fields, respectively.

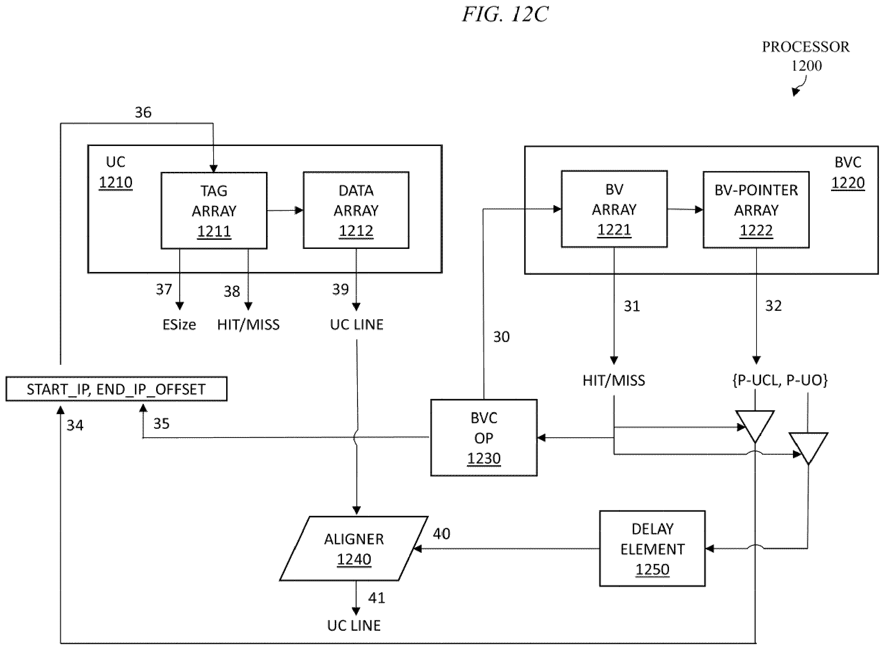

FIG. 12C depicts an example embodiment of a processor including a micro-operations cache and a branch vector cache for illustrating a process for handling mid-expansion of a PW. In FIG 12C, the processor 1200 is depicted as including the UC 1210, the BVC 1220, the BVC OP 1230, a data aligner 1240, and a delay element 1250. It will be appreciated that the processor 1200 may include various other elements which may be configured to support various other operations which may be performed so that the processor is configured such that cache lines created by a prediction window are not invalidated on misprediction of a branch instruction.

In FIG. 12C, a process or handling mid-expansion of a PW is illustrated. In FIG. 12C, a lookup is performed in the BVC 1220 in clock cycle (T+1) when the UC lookup failed in clock cycle T (the case to handle mid-expansion of PW). In clock cycle (T+1), BVC OP 1230 issues (Start_IP + End_IP_Offset) to the BV array 1221 for lookup by (key + size) of its entries (step 30). By the end of clock cycle (T+1), the BVC 1220 delivers the following two outputs: (1) the BV array 1221 delivers the hit/miss signal (step 31) and (2) the BV-pointer array 1222 delivers the tuple {P-UCL, P-UO} (step 32) if there is a hit.

In FIG. 12C, the hit/miss signal (step 31) is input to a few elements. The hit/miss signal (step 31) is input to the BVC OP 1230 and, if there is a hit, then it generates the stored (Start_IP + End_IP_Offset) (step 35). The hit/miss signal (step 31) is also input to an AND function that takes P-UCL as its second input and, if there is a hit, then P-UCL is sent as the Start_IP (step 34) to be looked up in the UC 1210. The hit/miss signal (step 31) is also input to an AND function that takes P-UO as its second input and, if there is a hit, then P-UO is sent to the delay element 1250 (step 33) that regenerates the P-UO at the end of clock cycle (T+2).

In FIG. 12C, assume that step 31 is a hit. Then, at clock cycle (T+2), the Start_IP (P-UCL from step 34) is input into the tag array 1211 for lookup (step 36). The subsequent steps are the same as illustrated in FIG. 12A, except that the matching UC line generated by step 39 (which is same as step 4 in FIG. 12A) at the end of clock cycle (T+2) is input to the data aligner 1240. The second input to the data aligner 1240 is the P-UO regenerated by the delay element 1250 (step 40). The data aligner strips the UOPs from the beginning of the UC line until the P-UO, so that only UOPs from P-UO onwards are sent to next stage (i.e., step 8 or step 12 in FIG. 12A). As illustrated in FIG. 12A, if End_IP_Offset is equal to or larger than the ESize (from step 3 in FIG. 12A) then step 8 delivers the final UOPs at the end of clock cycle (T+2), otherwise, a BVC lookup is needed for the (Start_IP + End_IP_Offset) to curtail the UOPs at clock cycle (T+3). So, the mid-expansion of PW may take three or four clock cycles.

It is noted that, in at least some example embodiments, the BVC 1220 may be powered off during normal operation and may be powered on when the BVC OP 1230 is activated for a BVC lookup.

It is noted that, during eviction of a UC line from a way in the UC to accommodate space for a new UC line in the way, the UC line being evicted may include one or more intermediate conditional branch instructions. So, the UC line may be referred by one or more entries in the BVC 1220. Upon eviction of the UC line, such BVC entries need to be invalidated, but it is not possible to do so within the clock cycles of the eviction process. So, at least some example embodiments may employ a "delayed invalidation" scheme as follows. A Tag Array entry includes a unique "Instance ID" allocated to the UC line. Every time the UC line is repurposed (i.e., evicted and allocated), the Instance ID must be changed (e.g., incremented by one or changed in any other suitable manner). The BV-pointer array 1222 entry that refers to the UC line also includes the same Instance ID of the UC line pointed to by the entry. When a BV entry is hit, then the following checks are made to verify the validity of the BV entry. If a UC line not found then the BV entry is marked as invalid. If a UC line found, but not marked as valid, then the BV entry is marked as invalid. If the Instance ID of the UC line is not same as the Instance ID in the BV-pointer entry, then the BV entry is marked as invalid (where it is noted that this would be the case when the UC line was repurposed for the same IP, e.g., note that multiple programs may be in the same virtual memory space and, hence, a repurposed UC line bearing the same IP may belong to a different program). In at least some example embodiments, the physical memory address mapped by the IP of a UC line may be used as the Instance ID, because the physical memory address mapped by an IP typically is guaranteed to be unique. Programs running in the same virtual memory space may have overlapping IPs, but the IPs will map to unique physical memory addresses.

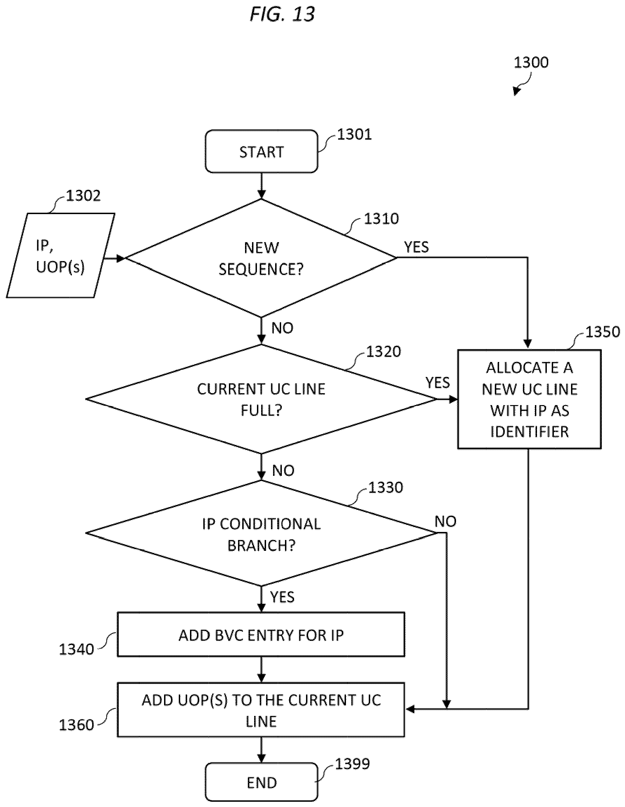

FIG. 13 depicts an example embodiment of a method for writing micro-operations to a UC (i.e., storing of UOPs of an instruction of a PW after the decode stage generated UOPs of the instruction). It will be appreciated that, while primarily presented as being performed serially, at least a portion of the functions of method 1300 may be performed contemporaneously or in a different order than as presented in FIG. 13. At block 1301, the method 1300 begins. The inputs to the method 1300, as indicated in block 1302, include an IP of an instruction and one or more UOPs of the decoded instruction. Block 1310 checks if the instruction is the beginning of a new sequence. If the instruction is not the beginning of a new sequence then the method proceeds to block 1320, otherwise the method 1300 proceeds to block 1350. Block 1320 checks if current UC line is full. The current UC line means the UC line where the UOPs of the previous instruction in the sequence had been stored. If the UC line is not full then the method 1300 proceeds to block 1330, otherwise the method 1300 proceeds to block 1350. Block 1350 allocates a new UC line in the UC with the IP of the instruction as the identifier of the UC line and makes it the current UC line. From block 1350, the method 1300 proceeds to block 1360. Block 1330 checks if the instruction is a conditional branch instruction. If the instruction is a conditional branch instruction then the method 1300 proceeds to block 1340, otherwise the method 1300 proceeds to block 1360. Block 1340 adds an entry in the BVC for the IP of the instruction. The entry points to the current UC line (i.e., P-UCL is set as identifier of the UC line) and the offset of the UOP(s) in the UC line (i.e., P-UO is the offset). From block 1340, the method 1300 proceed to block 1360. Block 1360 appends the UOP(s) of the instruction into the current UC line. From block 1360, the method 1300 proceeds to block 1399. At block 1399, the method 1300 ends.

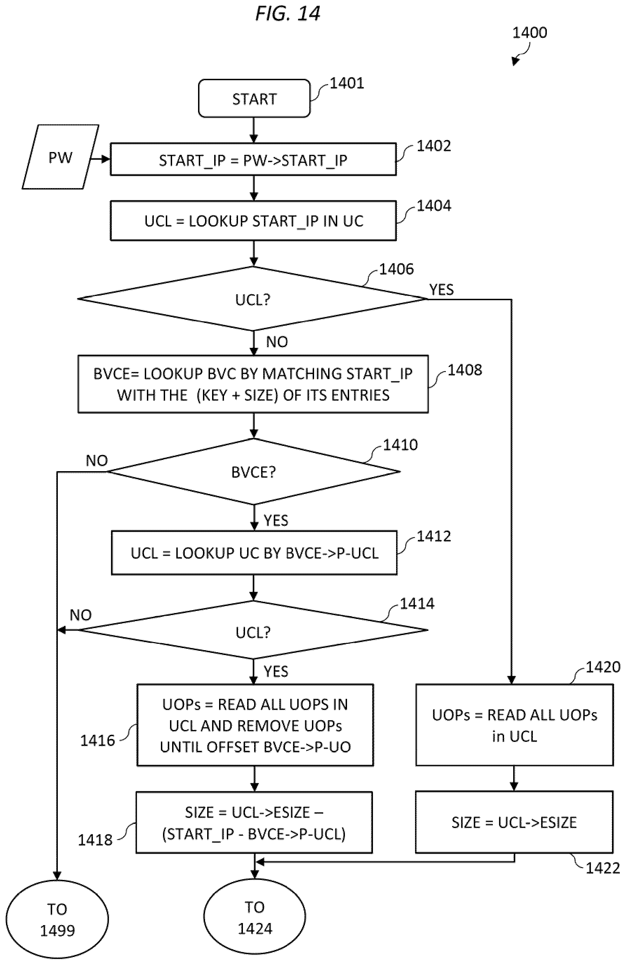

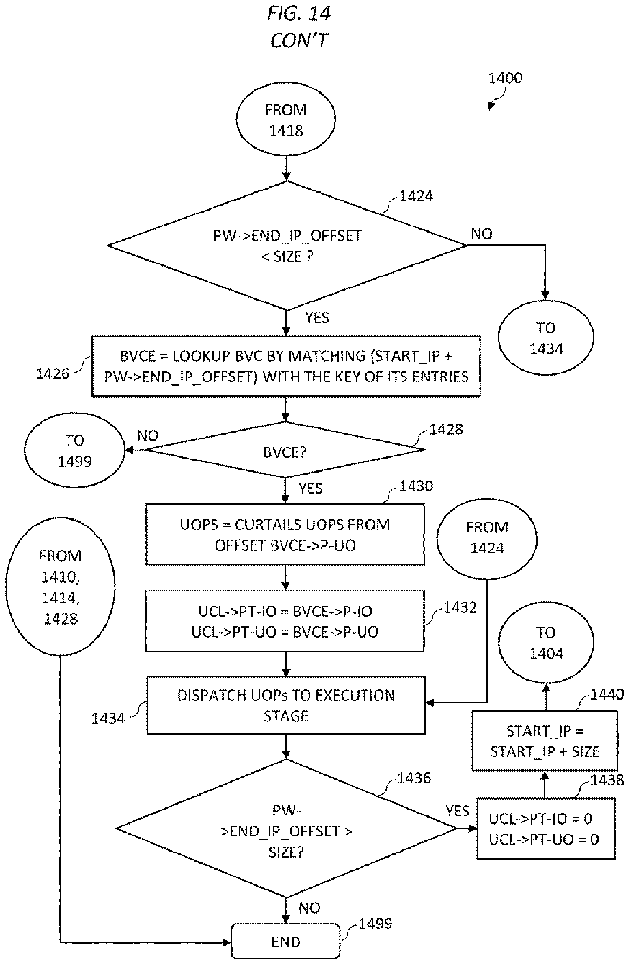

FIG. 14 depicts an example embodiment of a method for streaming of micro-operations from a UC for a PW. It will be appreciated that, although primarily presented as being performed serially, at least a portion of the functions of method 1400 may be performed contemporaneously or in a different order than as presented in FIG. 14.

At block 1401, the method 1400 begins. An input to the method 1400, as indicated in FIG 14, is a PW represented by the tuple {Start_IP, End_IP_Offset}.

Block 1402 saves the Start_IP of the PW to a local variable, and then the method 1400 proceeds to block 1404. Block 1404 looks up the UC line (denoted as "UCL") in the UC that matches the Start_IP, and the method 1400 then proceeds to block 1406. Block 1406 checks if the UC line is found. If the UC line is found then the method 1400 proceeds to block 1420, otherwise the method 1400 proceeds to block 1408. Block 1420 reads all UOPs in the UC line, and the method 1400 then proceeds to block 1422. Block 1422 stores the effective size of the UC line in a local variable and then the method 1400 proceeds to block 1424. It is noted that the size of the UC line is the "effective" size, i.e., if PT-IO in the UC line is non-zero then the size is PT-IO, otherwise the size is the complete size of the UC line.

When block 1408 is reached, it means that the Start_IP could be an instruction subsequent to a conditional branch instruction in a UC line, i.e., the case of mid-expansion of a PW. To check for this case, block 1408 looks up the Start_IP in the BVC by matching the (key + size) of its entries, and then the method 1400 proceeds to block 1410. Block 1410 checks if the BVC entry (denoted as BVCE) is found. If the BVC entry is found then the method 1400 proceeds to block 1412, otherwise the method 1400 proceeds to block 1499 and terminates without streaming any UOPs (meaning that the instructions for the PW need to be fetched and decoded by the front-end of the processor). Block 1412 looks up the UC line in the UC that matches the identifier indicated by the P-UCL of the BVC entry, and the method 1400 then proceeds to block 1414. Block 1414 checks if the UC line is found. If the UC line is found then the method proceeds to block 1416, otherwise the method 1400 proceeds to block 1499 and terminates without streaming any UOPs. Block 1416 reads all UOPs in the UC line and then strips the UOPs until the offset indicated by P-UO of the BVC entry, and the method 1400 then proceeds to block 1418. Block 1418 stores the size of the UOPs in the local variable. The size value in the local variable line is the (effective size - (Start_IP - P-UCL of BVCE)), which means the effective size reduced by the UOPs stripped at block 1416, and then the method 1400 proceeds to block 1424.

When block 1424 is reached, it means UOPs from Start_IP are available for a size (byte offset from Start_IP), except consideration of the End_IP_Offset of the PW. Block 1424 checks if the End_IP_Offset of the PW is less than size of UOPs, i.e., if UOPs need to be curtailed until End_IP_Offset. If the End_IP_Offset of the PW is less than size of UOPs then the method 1400 proceeds to block 1426, otherwise the method 1426 proceeds to block 1434. Block 1426 looks up (Start_IP + End_IP_Offset) in the BVC by matching it with the key of the BVC entries, and then the method 1400 proceeds to block 1428. Block 1428 checks if the BVC entry is found. If the BVC entry is found then the method 1400 proceeds to block 1430, otherwise the method 1400 proceeds to block 1499 and terminates without streaming any UOPs. Block 1430 curtails the UOPs from the offset indicated by P-UO of the BVC entry, and then the method 1400 proceeds to block 1432. Block 1432 sets the PT-IO of the UC line to the P-IO of the BVC entry and PT-UO of the UC line to the P-UO of the BVC entry, because the UC line is preterminated now up to the End_IP_Offset, and then the method 1400 proceeds to block 1434. Block 1434 dispatches the resultant UOPs to the execution stage, and then the method 1400 proceeds to block 1436. Block 1436 checks if End_IP_Offset is greater than the size of UOPs, i.e., if more UOPs are to be streamed for the PW. If End_IP_Offset is greater than the size of UOPs then the method 1400 proceeds to block 1438, otherwise the method 1400 proceeds to 1499 and terminates. Block 1438 sets the PT-IO and PT-UO values in the UCL to 0 since either the entire UCL has been streamed or UOPs in the UCL after the offset PT-UO need to be streamed next, and then the method 1400 proceeds to block 1440. Block 1440 increments the Start_IP by the value in the local size variable, and then the method 1400 returns to block 1404 to stream the next set of UOPs in the PW. At block 1499, the method 1400 ends.

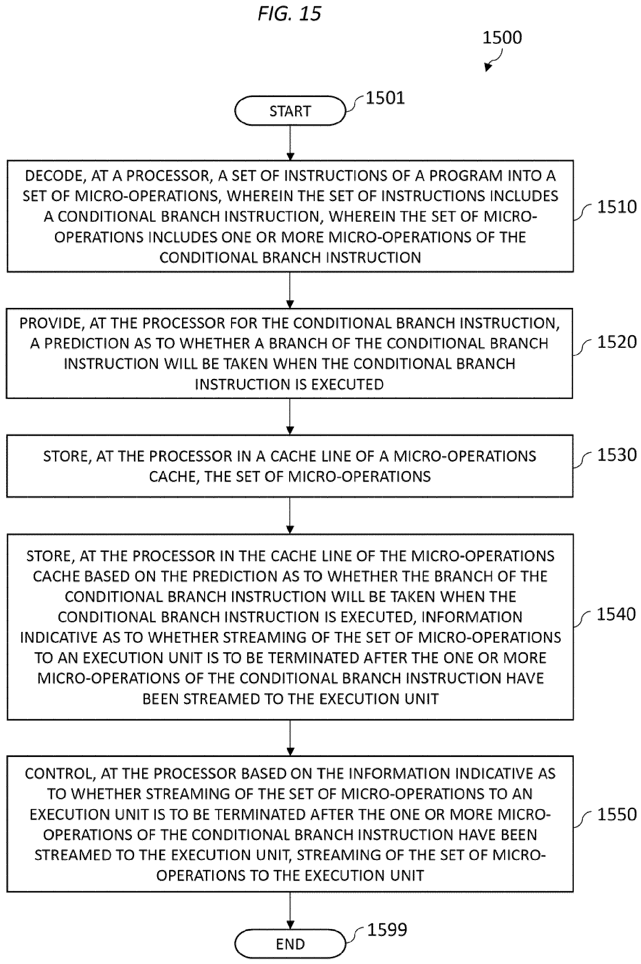

FIG. 15 depicts an example embodiment of a method for supporting execution of a program by a processor configured to ensure that cache lines of a micro-operations cache of the processor are not invalidated on misprediction of a branch instruction. It will be appreciated that, although primarily presented herein as being performed serially, at least a portion of the functions of method 1500 may be performed contemporaneously or in a different order than as presented in FIG. 15. At block 1501, the method 1500 begins. At block 1510, decode, at a processor, a set of instructions of a program into a set of micro-operations, wherein the set of instructions includes a conditional branch instruction, wherein the set of micro-operations includes one or more micro-operations of the conditional branch instruction. At block 1520, provide, at the processor for the conditional branch instruction, a prediction as to whether a branch of the conditional branch instruction will be taken when the conditional branch instruction is executed. At block 1530, store, at the processor in a cache line of a micro-operations cache, the set of micro-operations. At block 1540, store, at the processor in the cache line of the micro-operations cache based on the prediction as to whether the branch of the conditional branch instruction will be taken when the conditional branch instruction is executed, information indicative as to whether streaming of the set of micro-operations to an execution unit is to be terminated after the one or more micro-operations of the conditional branch instruction have been streamed to the execution unit. At block 1550, control, at the processor based on the information indicative as to whether streaming of the set of micro-operations to an execution unit is to be terminated after the one or more micro-operations of the conditional branch instruction have been streamed to the execution unit, streaming of the set of micro-operations to the execution unit. At block 1599, the method 1500 ends.

It will be appreciated that, although primarily presented herein with respect to specific types of processors (e.g., x86 or CISC processors), various example embodiments presented herein may be utilized within various other types of processors (e.g., Reduced Instruction Set Architecture (RISC) processors such as ARM or MIPS, or other types of processors that utilize UCs), other types of devices that utilized UCs, or the like.

Various example embodiments for providing a dynamic branch capable UC for a processor may provide various advantages or potential advantages. For example, various example embodiments for providing a dynamic branch capable UC for a processor may improve data processing throughput and power efficiency for processors. For example, various example embodiments for providing a dynamic branch capable UC for a processor may provide improved data processing throughput and power efficiency for processors which may be used in various processing contexts, including for virtualized network functions (e.g., virtualized service routers or other virtual functions which may use processors for processing various types of data) to provide optimal packet throughput and power efficiency even in the presence of frequency branch misprediction which may result due to handling of unpredicted varieties of packets. Various example embodiments for providing a dynamic branch capable UC for a processor may provide various other advantages or potential advantages.

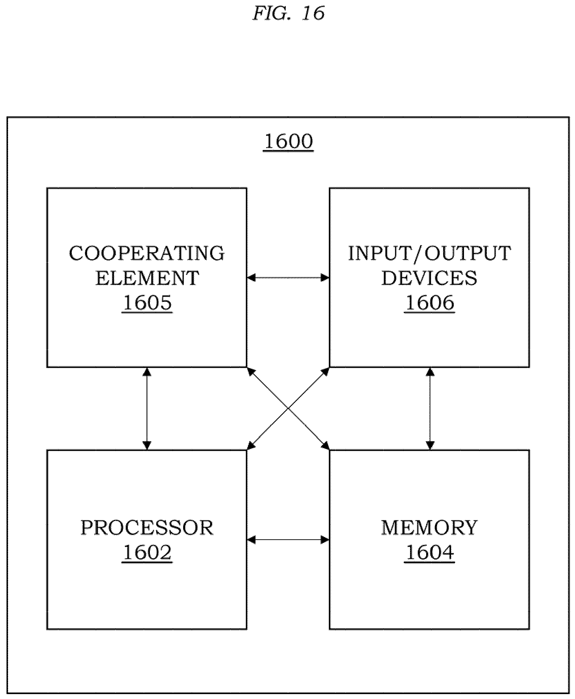

FIG. 16 depicts an example embodiment of a computer suitable for use in performing various functions presented herein.

The computer 1600 includes a processor 1602 (e.g., a central processing unit (CPU), a processor, a processor having a set of processor cores, a processor core of a processor, or the like) and a memory 1604 (e.g., a random access memory (RAM), a read-only memory (ROM), or the like). In at least some example embodiments, the computer 1600 may include at least one processor and at least one memory storing instructions that, when executed by the at least one processor, cause the computer to perform various functions presented herein.

The computer 1600 also may include a cooperating element 1605. The cooperating element 1605 may be a hardware device. The cooperating element 1605 may be a process that can be loaded into the memory 1604 and executed by the processor 1602 to implement various functions presented herein (in which case, for example, the cooperating element 1605 (including associated data structures) can be stored on a non-transitory computer readable medium, such as a storage device or other suitable type of storage element (e.g., a magnetic drive, an optical drive, or the like)).

The computer 1600 also may include one or more input/output devices 1606. The input/output devices 1606 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 1600 may represent a general architecture and functionality suitable for implementing functional elements described herein, portions of functional elements described herein, or the like, as well as various combinations thereof. For example, computer 1600 may provide a general architecture and functionality that is suitable for implementing one or more elements presented herein.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
means for decoding a set of instructions of a program into a set of micro-operations, wherein the set of instructions includes a conditional branch instruction, wherein the set of micro-operations includes one or more micro-operations of the conditional branch instruction;
means for providing, for the conditional branch instruction, a prediction as to whether a branch of the conditional branch instruction will be taken when the conditional branch instruction is executed; and
means for storing, in a cache line of a micro-operations cache, the set of micro-operations; and
means for storing, in the cache line of the micro-operations cache based on the prediction as to whether the branch of the conditional branch instruction will be taken when the conditional branch instruction is executed, information indicative as to whether streaming of the set of micro-operations to an execution unit is to be terminated after the one or more micro-operations of the conditional branch instruction have been streamed to the execution unit.

2. The apparatus according to claim 1, wherein the apparatus comprises means for:
controlling, based on the information indicative as to whether streaming of the set of micro-operations to an execution unit is to be terminated after the one or more micro-operations of the conditional branch instruction have been streamed to the execution unit, streaming of the set of micro-operations to the execution unit.

3. The apparatus according to any of claims 1 to 2, wherein the information indicative as to whether streaming of the set of micro-operations to the execution unit is to be terminated after the one or more micro-operations of the conditional branch instruction have been streamed to the execution unit is stored in metadata of the cache line.

4. The apparatus according to any of claims 1 to 3, wherein the information indicative as to whether streaming of the set of micro-operations to the execution unit is to be terminated after the one or more micro-operations of the conditional branch instruction have been streamed to the execution unit includes:
a first variable configurable to indicate an offset of an instruction pointer of the conditional branch instruction; and
a second variable configurable to indicate an offset of a last micro-operation of the one or more micro-operations of the conditional branch instruction.

5. The apparatus according to claim 4, wherein the first variable and the second variable are set based on whether the conditional branch instruction is predicted to not be taken when the conditional branch instruction is executed.

6. The apparatus according to claim 4, wherein, when the conditional branch instruction is predicted to not be taken when the conditional branch instruction is executed, the first variable is set to zero and the second variable is set to zero.

7. The apparatus according to claim 4, wherein, when the conditional branch instruction is predicted to be taken when the conditional branch instruction is executed, the first variable is set to the offset of the instruction pointer of the conditional branch instruction and the second variable is set to the offset of the last micro-operation of the one or more micro-operations of the conditional branch instruction.

8. The apparatus according to any of claims 1 to 7, wherein the apparatus comprises means for:
updating, based on a condition that results in a resizing of the prediction window, the information indicative as to whether streaming of the micro-operations to the execution unit is to be terminated after the one or more micro-operations of the conditional branch instruction have been streamed to the execution unit.

9. The apparatus according to any of claims 1 to 8, further comprising means for:
storing, in a branch vector cache, information indicative of a location of the one or more micro-operations of the conditional branch instruction within the cache line of the micro-operations cache.

10. The apparatus of claim 9, wherein the apparatus comprises means for:
controlling, based on the information indicative of the location of the one or more micro-operations of the conditional branch instruction within the cache line of the micro-operations cache, streaming of the set of micro-operations to the execution unit.

11. The apparatus according to any of claims 1 to 10, wherein the means for providing the prediction comprise means for generating a prediction window indicative of a sequence of instructions in the set of instructions predicted to be executed, wherein invalidation of the cache line of the micro-operations cache is prevented based on a determination that a branch misprediction for the conditional branch instruction causes a dynamic resizing of the prediction window.

12. The apparatus according to any of claims 1 to 11, wherein the apparatus comprises means for:
providing a subset of the micro-operations of the cache line to an execution unit based on detection of a condition associated with the prediction window.

13. The apparatus according to claim 12, wherein the condition is a shrinking of the prediction window, wherein the subset of the micro-operations of the cache line includes a starting micro-operation of the cache line through a final micro-operation of the one or more micro-operations of the conditional branch instruction.

14. The apparatus according to claim 12, wherein the condition is an expansion of the prediction window, wherein the subset of the micro-operations of the cache line includes a starting micro-operation of an instruction immediately following the conditional branch instruction through a final micro-operation of the cache line.

15. A method, comprising:
decoding a set of instructions of a program into a set of micro-operations, wherein the set of instructions includes a conditional branch instruction, wherein the set of micro-operations includes one or more micro-operations of the conditional branch instruction;
providing, for the conditional branch instruction, a prediction as to whether a branch of the conditional branch instruction will be taken when the conditional branch instruction is executed;
storing, in a cache line of a micro-operations cache, the set of micro-operations;
storing, in the cache line of the micro-operations cache based on the prediction as to whether the branch of the conditional branch instruction will be taken when the conditional branch instruction is executed, information indicative as to whether streaming of the set of micro-operations to an execution unit is to be terminated after the one or more micro-operations of the conditional branch instruction have been streamed to the execution unit; and
controlling, based on the information indicative as to whether streaming of the set of micro-operations to an execution unit is to be terminated after the one or more micro-operations of the conditional branch instruction have been streamed to the execution unit, streaming of the set of micro-operations to the execution unit.
